# EUROPÄISCHE PATENTANMELDUNG

(11) **EP 1 707 611 A2**
(43) Veröffentlichungstag der Anmeldung: **04.10.2006**
(21) Anmeldenummer: 06009332.5
(22) Anmeldetag: 07.09.2001
(51) Int. Cl.: C09K 11/08, G01N 21/91, G01N 21/76, G07D 7/00, C09D 11/00, A61B 5/117

(54) **Nanopartikelsynthese**

(30) Priorität: 08.09.2000 WO PCT/DE00/03130
(62) Teilanmeldung aus: 01976022.2
(71) Anmelder: Nanosolutions GmbH, 22525 Hamburg (DE)
(72) Erfinder: Haubold, Stephan, 22085 Hamburg (DE); Haase, Markus, 22457 Hamburg (DE); Riwotzky, Carsten, 22089 Hamburg (DE); Weller, Horst, 22393 Hamburg (DE); Meysamy, Heike, 20149 Hamburg (DE); Ibarra, Fernando, 20255 Hamburg (DE)
(74) Vertreter: HOFFMANN EITLE

(57) **Zusammenfassung**

Die vorliegende Erfindung betrifft Verfahren zur Herstellung fluoreszenzfähiger, anorganischer Nanopartikel, wobei die Nanopartikel aus einem wenigstens einen Dotanden enthaltenden Wirtsmaterial bestehen. Durch die erfindungsgemäße Synthese mit organischen Lösungsmitteln kann eine wesentlich bessere Ausbeute erzielt werden als bei der Wassersynthese vom Stand der Technik. Gegenstände aller Art können vorteilhaft markiert und mittels automatisiertem Verfahren sicher anhand charakteristischer Emission authentifiziert werden. Weiter ist die Größenverteilung der hergestellten Nanopartikel enger, was eine nachträgliche größenselektive Trennung überflüssig macht.

## Beschreibung

### STAND DER TECHNIK

Die vorliegende Erfindung betrifft Verfahren zur Synthese von Nanopartikeln, insbesondere von Metallsalz Nanopartikeln, wobei die Nanopartikel auch fluoreszenzfähig, sowie dotiert hergestellt werden können.

Metallsalz-Nanopartikeln im Sinne der vorliegenden Erfindung weisen ein Kristallgitter oder im Falle einer Dotierung ein Wirtsgitter auf, dessen Kation ein Metall, insbesondere ein Metall der dritten Nebengruppe des Periodensystems, beispielsweise Lanthan ist, oder ein Seltenerdmetall und dessen Anion, etwa PO₄³⁻, aus einer geeigneten Anionquelle gewonnen wird, beispielsweise einer freien Säure der Salze der jeweils herzustellenden Nanopartikel, etwa Lanthanphosphat-Nanopartikel, gewonnen wird.

Für die Synthese dieser Metallsalz-Nanopartikel ist der nächstkommende Stand der Technik die wissenschaftliche Publikation "Wet-Chemical Synthesis of Doped Colloidal Nanomaterials: Particles and Fibres of LaPO4:Eu, LaPO4:Ce, and Lapo4:Ce,Tb",by Messamy H., Riwotzki K., Kornowski A., Naused S., and Haase M:, in Advanced Materials, 1999, 11, No.10, S. 840ff., herausgegeben am 5. Juli 1999. Durch eine naßchemische Synthese der Ausgangsstoffe in Wasser (Hydrothermalsynthese) können undotierte oder dotierte Nanopartikel insbesondere der oben genannten Metallsalz-Nanopartikel kolloidal in Wasser erzeugt werden. Mit weiteren Verfahrensschritten des Ausfällens und nachfolgenden Zentrifugierens kann eine Trockensubstanz als Konzentrat hergestellt werden.

Die Hydrothermalsynthese im oben genannten Verfahren resultiert allerdings grundsätzlich in einer relativ breiten Partikelgrößenverteilung und damit schlechten Ausbeute an Partikeln einer bestimmten (gewünschten) Größe. Im oben genannten Verfahren liegt beispielsweise der Anteil von Partikeln mit Durchmessern unter 25 nm bei etwa 20% verwertbarer Teilchen, gemessen an der Gesamtmenge der durch das Verfahren gewonnenen, kristallinen Substanz. Desweiteren ist die Verwendung eines Autoklaven wegen der hohen Drücke durch die Verwendung von Wasser als Synthesemedium zumindest für eine industrielle Fertigung der Zielsubstanz als nachteilig anzusehen. Daher wäre es wünschenswert, die Ausbeute zu erhöhen, und die Synthese labortechnisch bzw. produktionstechnisch zu vereinfachen.

Allerdings wäre eine vereinfachte und effizientere Herstellung nicht nur für die o.g. Lanthanphosphat-Nanopartikel gewünscht, sondern - angesichts der immer mehr zunehmenden Anwendungsmöglichkeiten für Nanopartikel - für eine grosse Gruppe von Nanopartikeln, bei denen das Kristallgitter oder Wirtsgitter insbesondere Verbindungen aus der Gruppe der Phosphate, Halophosphate, Arsenate, Sulfate, Borate, Aluminate, Gallate, Silikate, Germanate, Oxide, Vanadate, Niobate, Tantalate, Wolframate, Molybdate, Alkalihalogenate, andere Halogenide, Nitride, Sulfide, Selenide, Sulfoselenide, sowie Oxysulfide enthalten kann..

Bezüglich der speziellen Aspekte der Dotierung von Nanopartikeln und der Fluoreszenzfähigkeit der Nanopartikel zeigt die oben genannte Veröffentlichung vom 5. Juli 1999 einen Weg zur Herstellung anorganischer Flüoreszenzfarbstoffe auf, die sehr viel langzeitstabiler sind, als herkömmliche organische Fluoreszenzfarbstoffe. Die im Titel der Publikation genannten Nano-Phosphatteilchen werden gezielt mit Lanthanid-Ionen dotiert, die den Teilchen fluoreszierende Eigenschaften verleihen.

Damit ist zwar eine Substanz bekannt, bei der die positive Eigenschaft der Langlebigkeit des Farbstoffes aufgrund dessen anorganischer Natur ausgenutzt wird, jedoch unter Inkaufnahme der oben genannten Nachteile der Hydrothermalsynthese, nämlich insbesondere hoher Druck und geringe Ausbeute.

Im weiteren, folgend zitierten Stand der Technik werden fluoreszierende Farbstoffe beispielsweise zur Kennzeichnung von Schecks, wie es in der US Patentschrift No. 3,886,083 beschrieben ist, als Sicherheitstinten, wie es in der chinesischen Patentschrift CN 1,193,640 offenbart ist, zur Detektion von Rissen in Oberflächen, wie es in der US Patentschrift No. 4,331,871 beschrieben ist, zur Detektion von Fingerabdrücken, siehe US Patent No. 4,700,657, weiter als Markierungen von klaren Kunststoffteilen wie Brillengläsern und Kontaktlinsen und anderen Produkten, siehe die US Patente, Nos. US 4,238,524, und US 5,418,855, sowie im Bereich der Leckprüfung eingesetzt, siehe WO 9 820 365.

In diesen Veröffentlichungen dienen allerdings organische Substanzen als Fluoreszenzfarbstoffe.

Nachteile der beschriebenen organischen, Farbstoffe sind ihre unzulängliche Stabilität und ihre daraus folgende Ausbleichung, der häufig geringe Abstand zwischen anregendem und emittiertem Licht, was Probleme bei der Unterscheidung des Emissionslichtes vom Anregungslicht schafft, des weiteren die Farbigkeit der verwendeten Farbstoffe unter Normallicht, was sich entweder störend auf das Design des fluoreszierenden Produktes oder die Sicherheit der Markierung auswirkt, mangelnde chemische Stabilität gegenüber äußeren Einflüssen, was den Einsatzbereich der Farbstoffe beschränkt, und häufig mangelnde Transparenz der Farbstoffe im Zusammenhang mit klaren Kunststoffen, Fenstern und Sicherheitsmarkierungen auf jeglichen Gegenständen die einem hohen Sicherheitsanspruch gerecht werden müssen. Beispielsweise seien Scheckkarten, Kreditkarten, Kundenkarten, Fahrzeugmarkierungen, Markierung von Wertgegenständen, wie Schmuck, Kunstgegenstände genannt, darüber hinaus solche Produkte, die eine eindeutige Herstelleridentifikation ermöglichen sollen, ohne äußerlich für den Kunden oder einen potentiellen Fälscher erkenntlich zu sein.

Auch Nanopartikel werden als mögliche Träger für fluoreszierende Farbstoffe verwendet, als es z.B. durch die Offenbarung der WO 9937814 erkannt wurde, dass es nachteilig ist, die fluoreszierenden Farbstoffe nur durch eine Bindung an die Oberfläche des jeweiligen Trägermaterials zu binden. Die wichtigen Farbstoffe sind dadurch anfällig gegenüber Umwelteinflüssen und können z.B. durch chemische Reaktionen, wie Oxidation, und Reduktion leicht in ihrer Wirkung geschwächt werden. Gerade dies soll aber prinzipiell vermieden werden, da eine Langzeitstabilität der Fluoreszenz in den meisten Anwendungsfällen erforderlich ist.

In der oben erwähnten WO 9937814 ist ein Weg zur Herstellung sogar mehrfarbiger Fluoreszenz beschrieben. Es werden zunächst polymere Mikropartikel hergestellt, die polymere Nanopartikel tragen, die ihrerseits mit fluoreszierenden organischen Farbstoffen aus der allgemein als Cyaninfarbstoffe bekannten Klasse getränkt sind. Es werden also gefärbte Nanopartikel in poröse Mikropartikel inkorporiert. Mehrere Farbstoffe können gleichzeitig verwendet werden, um unterschiedliche Farben bei der Fluoreszenzemission der Mikropartikel zu erzeugen. Die Mikropartikel und Nanopartikel weisen bevorzugt durch zusätzliche Funktionsgruppen an der jeweiligen Oberfläche eine nicht-glatte Oberfläche auf, um die Bindungen zu erleichtern. Dadurch entstehen Träger mit großer Oberfläche, um viele Nanopartikel bzw. Farbstoffe an der Peripherie der Mikropartikel und zum Teil in deren geringfügig weiter innen liegenden Bereichen anlagern zu können.

Ein Nachteil an diesem Verfahren ist jedoch, dass hier organische Fluoreszenzmaterialien verwendet werden, die trotz der zumindest teilweisen Inkorporierung in Mikropartikel der vorerwähnten verfrühten Altersabnutzung unterliegen und damit schlechte Langzeitstabilität zeigen.

Ein grundsätzlicher Nachteil bei der Verwendung organischer Farbstoffe ist, dass sie durch nicht-angepaßte, zu starke Anregung zerstört werden können und ihre Farbwirkung verlieren.

Ein weiterer Nachteil besteht darin, dass solche Stoffe das Phänomen der sogenannten Konzentrationslöschung. ("concentration quenching") zeigen, d.h., liegen die fluoreszierenden Teilchen zu konzentriert vor, beispielsweise in Pulverform, so re-absorbieren die fluoreszierenden Partikel grosse Teile der oder sämtliche emittierte Fluoreszenzstrahlung wieder. Ein organischer Fluoreszenzfarbstoff in Pulverform leuchtet daher schlecht. Diese Eigenschaft ist sehr nachteilhaft, da die maximal erreichbare Fluoreszenzintensität durch Konzentrationslöschung beschränkt ist.

Ein weiterer Nachteil besteht darin, daß diese organischen Fluoreszenzfarbstoffe nicht in geeigneter Weise, das heißt vor allem nicht flexibel genug für die speziellen Erfordernisse vieler Anwendungsfälle zur Markierung von Gegenständen verwendet werden können.

### AUFGABE DER ERFINDUNG

Daher besteht die Aufgabe der Erfindung darin, unter Vermeidung der Nachteile der Hydrothermalsynthese eine organische Synthese von Nanopartikeln für die eingangs genannten Stoffgruppen zu ermöglichen.

### ZUSAMMENFASSUNG UND VORTEILE DER ERFINDUNG

Im folgenden sei auf die Ansprüche Bezug genommen. Das erfindungsgemäße Verfahren mit den Merkmalen des Anspruchs 1 weist gegenüber dem Verfahren, wie es in der eingangs genannten Veröffentlichung beschrieben ist, den Vorteil auf, daß eine wesentlich bessere Ausbeute erzielt werden kann. Der Grund liegt in einer wesentlich engeren Größenverteilung der hergestellten Nanopartikel, was eine nachträgliche größenselektive Trennung überflüssig macht.

Desweiteren wird eine Lehre synoptischer Natur offenbart, durch deren universellen Lösungsansatz die individuellen Syntheseschwierigkeiten von einzelnen, gewünschten Nanopartikel-Stoffgruppen jeweils mit speziellen, aus der synoptischen Lehre sofort erkennbaren, erfindungsgemässen Lösungsansätzen überwunden werden können.

Diese Lehre der Erfindung ist unabhängig davon, ob dotierte oder nicht-dotierte Nanopartikel hergestellt werden sollen. Sofern Ausführungsbeipiele für die Synthese von dotierten Nanopartikeln gegeben werden, sollte verstanden werden, dass die Herstellungsvorschrift für entsprechende nicht-dotierte Nanopartikel im wesentlichen durch Ersatz des für die Dotierung erforderlichen Ausgangsstoffes durch eine entsprechende Menge des Ausgangsstoffes für das Wirtsgittermaterial gewonnen werden kann. Weiter wird der Begriff der Dotierung hierin sehr umfassend verwendet, so dass er nicht durch einen bestimmten maximalen Prozentsatz der Gitterplätze für den Dotanden, eingeschränkt wird. Er umfasst also auch beispielsweise Mischphosphatnanopartikel, oder andere, die etwa paritätische Anteile zweier oder mehrerer Kationen aufweisen.

Gemäß dem allgemeinsten Aspekt der Erfindung wird ein Verfahren offenbart zur Synthese von Metallsalz-Nanopartikeln mit einem Kristallgitter oder Wirtsgitter, dessen Kation, z.B. La³⁺, aus einer Kationquelle gewinnbar z.B. LaC13 ist, und dessen Anion aus einer als Anionquelle dienenden Stoffklasse gewinnbar ist, wobei das Wirtsmaterial insbesondere Verbindungen aus der Gruppe der Phosphate, Halophosphate, Arsenate, Sulfate, Borate, Silikate, Aluminate, Gallate, Germanate, Oxide, Vanadate, Niobate, Tantalate, Wolframate, Mölybdate, Alkalihalogenate, andere. Halogenide, Nitride, Sulfide, Selenide, Sulfoselenide, sowie Oxysulfide enthalten kann, gekennzeichnet durch die Schritte:
a) Herstellen einer Synthesemischung, zumindest aus
   aa) einem organischen Lösungsmittel', das wenigstens eine das Kristallwachstum der Nanopartikel steuernde, eine phosphororganische Verbindung enthaltende Komponente aufweist, oder eine Aminverbindung, insbesondere ein Monoalkylamin, insbesondere Dodecylamin, oder ein Dialkylamin, insbesondere Bis-(ethylhexyl)-amin, insbesondere für Zink enthaltende Nanopartikel,
   bb) einem als Kationquelle dienenden, in der Synthesemischung löslichen oder zumindest darin dispergierbaren Kationausgangsstoff, insbesondere einer Metallsalzausgangsverbindung, bevorzugt Metallchlorid oder einem Alkoxid, und
   cc) einem als Anionquelle dienenden, in der Synthesemischung löslichen oder zumindest darin dispergierbaren Anionausgangsstoff aus der Stoffklasse, wobei die Stoffklasse enthält:
      aaa) freie Säuren der Salze der jeweils herzustellenden Metallsalz-Nanopartikel, z.B. Phosphorsäure, bbb) in der Synthesemischung lösliche oder zumindest dispergierbare Salze, beispielsweise solche mit organischem Kation oder Metallsalze, bei letzterem vorzugsweise Alkalimetallsalze, oder
      ccc) organische Verbindungen, die ab einer erhöhten Synthesemindesttemperatur das Anion freisetzen,
   wobei je nach Wahl des Salzes der herzustellenden Nanopartikel ein geeigneter, anionspendender Stoff aus der Stoffklasse gewählt wird, und
b) Halten der Mischung über einer vorgegebenen Synthesemindesttemperatur während einer zu der Temperatur passenden Synthesezeitspanne, vorzugsweise unter Vermeidung von Absetzvorgängen in der Mischung.

Es wird daher gemäß dem allgemeinsten, herstellungstechnischen Aspekt der vorliegenden Erfindung ein breit anwendbarer Lösungsansatz offenbart, der die Synthese verschiedenartigster Metallsalz-Nanopartikel ermöglicht, und der sogar die Synthese von bestimmten Halbleiter-Nanopartikeln erstmals ermöglicht.

Zudem sind fluoreszierende Nanopartikel mit sehr geringer Größe von wenigen Nanometern Ausmaß erzeugbar, was ihre homogene Einbindung in feinste Folien, feinste Beschichtungen, eine gute Auflösung in Flüssigkeiten ohne das für größere Partikelgrößen typische Absetzen gewisser Anteile am Boden der Flüssigkeit, oder die homogene Durchmischung mit feinsten Stäuben ermöglicht, ohne daß eine Materialveränderung bezüglich des jeweiligen Trägerstoffes fühlbar wird.

Schließlich ist das Herstellungsverfahren für viele der beanspruchten erfindungsgemäßen Substanzen wesentlich weniger riskant, da es ohne Überdruck und ohne Einsatz eines Autoklaven durchgeführt werden kann.

In bevorzugter Weise kann das grundlegende Syntheseverfahren verwendet werden
a) zur Herstellung von Nanopartikeln mit Phosphor enthaltenden Anionen Phosphorsäure als Anionquelle verwendet wird, wobei
   zur Herstellung von Nanopartikeln mit Bor enthaltenden Anionen Borsäure als Anionquelle verwendet wird, wobei
   zur Herstellung von Nanopartikeln mit Fluor enthaltenden Anionen Flusssäure als Anionquelle verwendet wird, wobei
b) im Falle einer Verwendung eines Salzes aus der Anionenstoffklasse mit organischem Kation ein Salz mit einem Trialkylammonium- oder Tetraalkylammonium-Kation verwendet wird. Beispielsweise wird zur Herstellung von Nanopartikeln mit Phosphat enthaltenden Anionen Tetrabutylammoniumdihydrogenphosphat, Tetramethylammonium-dihydrogenphosphat oder Triethylammonium-dihydrogenphosphat, zur Herstellung von Nanopartikeln mit Sulfat enthaltenen Anionen Tetrabutylammonium-hydrogensulfat, Tetramethylammonium-hydrogensulfat, Bis-Tetrabutylammoniumsulfat oder Triethylammonium-hydrogensulfat, zur Herstellung von Nanopartikeln mit Fluorid enthaltenen Anionen Triethylamin-trishydrofluorid, Pyridinhydrofluorid oder Collidinhydrofluorid, zur Herstellung von Nanopartikeln mit Sulfid enthaltenen Anionen Collidinhydrosulfid als Anionquelle verwendet. Im Falle der Verwendung eines in der Synthesemischung schwer löslichen Salzes aus der Anionenstoffklasse wird bevorzugt ein Komplexbildner für die Metallkomponente des Metallsalzes zur leichteren Löslichkeit dessen zur Synthesemischung zugegeben, für Alkalimetallsalze bevorzugt ein Kronenether.

Im Falle einer Verwendung einer, bei erhöhter Temperatur zersetzlichen und anionspendenden, organischen Verbindung kann bevorzugt ein vorbestimmter Ester einer dem jeweilig gewählten Anion entsprechenden Säure eingesetzt werden. Es eignet sich ein Ester eines Alkohols, der bei erhöhter Temperatur (also unter den Synthesebedingungen) zur Eliminierung neigt und somit Wasser abspaltet. Beispiele für solche Alkohole sind 2-Methyl-2-propanol, 2-Butanol und 2-Methyl-2-butanol.
Für Phosphate kann ein Phosphorsäureester, für Silikate ein Kieselsäureester, für Borate ein Borsäureester, für Sulfate ein Schwefelsäureester, für Vanadate ein Vandinsäureester, für Wolframate ein Wolframsäureester verwendet werden.

Für Halophosphate kann beispielsweise ein Gemisch aus Triethylammonium-dihydrogenphosphat und Triethylamintrihydrofluorid eingesetzt werden, was beides käuflich erworben werden kann.

Leicht zersetzliche Alkoxide können in entsprechender Weise bevorzugt bei Niobaten, Tantalaten, Aluminaten, Gallaten, Arsenaten und Germanaten als anionspendender Stoff verwendet werden.

Für Sulfide kann neben den Metallsalzen auch Bistrimethylsilylsulfid als anionspendender Stoff, für Selenide in entsprechender Weise Bis- trimethylsilylselenid, und für Sulfoselenide eine entsprechende Mischung aus den vorgenannten Substanzen eingesetzt werden.

Als phosphororganische Verbindung für die Wachstumssteuerkomponente kann bevorzugt wenigstens eines von
a) Phosphinsäureester ( (R₁-) (R₂-) (R₃-O-)P=O ),
b) Phosphonsäurediester, ( (R₁-) (R₂-O-) (R₃-O-)P=O ),
c) Phosphorsäuretriester, (Trialkylphosphate) ( (R₁-O-)(R₂₋O-) (R₃-O-)P=O ),
d) Trialkylphosphane, ( (R₁-O-) (R₂-O-) (R₃-O-)P ), insbesondere Trioctylphosphan (-TOP),
e) Trialkylphosphanoxide, ( (R₁-) (R₂-) (R₃-)P=O ), insbesondere Trioctylphosphanoxid (TOPO), im Lösungsmittel enthalten sein.

Angegeben sind oben nur Pseudostrukturformeln. Die einzelnen Sauerstoff (0) Atome sind dabei sämtlich an das Phosphoratom (P) gebunden. R1, R2, R3 sind dabei zunächst verzweigte oder unverzweigte Alkanketten mit mindestens einem Kohlenstoffatom oder Phenyl-, Toloyl-, Xylyl-, oder Benzylgruppen.

Besonders die unter a) bis c) genannten Ester bilden, vermutlich über das durch eine Doppelbindung an den Phosphor gebundene Sauerstoffatom, eine Bindung besonders geeigneter Stärke zu vielen Metallausgangsverbindungen aus, die in vorteilhafter Weise bei der Synthese ausgenutzt werden kann. Damit lassen sich besondere Nanopartikel besonderer Stoffgruppen synthetisieren.

Insbesondere zeigen die Metallsalz-Partikel bei Verwendung der unter a) bis c) genannten Ester eine noch bessere Löslichkeit, noch bessere Dispergierbarkeit und noch geringere Tendenz zur Bildung von Agglomeraten als bei Verwendung der anderen wachstumskontrollierenden Substanzen.

Dieses Phänomen beruht wahrscheinlich auf einer teilweisen Zersetzung der Ester in einem späten Stadium der Synthese, zu dem bereits praktisch die gesamte Menge an Metallausgangsverbindung und anionenspendender Ausgangssubstanz zu Metallsalz-Nanopartikeln abreagiert hat. Die teilweise Zersetzung der Ester setzt dabei offenbar Produkte frei, die reaktiv an die Oberfläche der bereits gebildeten Partikel ankoppeln und dadurch zu deren oben genannten, nochmals verbesserten Eigenschaften führen.

Wahrscheinlich werden bei diesem langsamen Zersetzungsprozess Alkoholgruppen von den unter a) bis c) genannten Estern abgespalten. Neben Alkohol entsteht dabei als weiteres Zersetzungsprodukt Phosphinsäure bei Verwendung eines Phosphinsäureesters, Phosphonsäure und Phosphonsäuremonoester bei Verwendung eines Phosphonsäurediesters, bzw. Phosphorsäure-monoester und -diester bei Verwendung eines Phosphorsäuretriesters.

Alle diese Zersetzungsprodukte (außer den Alkoholen) enthalten saure P-OH-Gruppen, von denen bekannt ist, daß sie sehr feste Bindungen mit Metallionen eingehen können. Die Ankopplung dieser Zersetzungsprodukte an die Nanopartikel geschieht also möglicherweise durch Bindung an die Metallionen der Partikeloberfläche.
Darüberhinaus ist auch eine reaktive Ankopplung des durch die Zersetzung freigesetzten Alkohols an die Partikel denkbar. Beispielsweise kann bei phosphathaltigen Nanopartikeln (wie Lanthanphosphat) der Alkohol an eine Phosphatgruppe der Partikeloberfläche unter Bildung einer Esterbindung angekoppelt werden.

Erwähnt sei schließlich noch, daß wir eine analoge Zersetzung von Estern unter Abspaltung der Alkoholgruppen auch bei den oben als Anionenquelle genannten Estern ausnutzen. Allerdings werden für diesen Zweck Ester gewählt, die thermisch instabil sind, d.h. bei denen sämtliche Alkoholgruppen bereits in den ersten Synthesestadien schnell und vollständig abgespalten werden. Die in diesem Fall vollständige Abspaltung aller Alkoholgruppen führt zum Anion, welches anschließend mit der Metallausgangsverbindung reagiert.

Auch Mischungen der phosphororganischen Verbindungen können verwendet werden, um die Synthese flexibel zur Synthese von Nanopartikeln aus verschiedenen Stoffgrupen zu realisieren.

Eine weitere flexible Anpassung der Synthese an die verschiedenen Stoffklassen kann erreicht werden durch den Einsatz einer Mischung bestehend aus mindestens einer der oben genannten wachstumsregulierenden Substanzen und einem oder mehreren Lösungsmitteln, wobei die metallkomplexierenden Eigenschaften dieser Lösungsmittel geringer sind als die der wachstumsregulierenden Komponenten. Bevorzugt sind solche Lösungsmittel, die in der Lage sind, Kristallwasser von Metallausgangsverbindungen zumindest teilweise freizusetzen. Der Einsatz einer solcher Mischung:kann auch aus einem anderen Grund vorteilhaft sein, wie im folgenden diskutiert:

Zum Beispiel werden gemäß einem Einzelaspekt der vorliegenden Erfindung werden Trialkylphosphate und Trialkylphosphane als koordinierende Lösungsmittel eingesetzt. Dies impliziert die Verwendung relativ großer Mengen dieser Substanzen; Beispielsweise werden danach für die Synthese von LaPO₄:Ce,Tb Nanopartikeln 6 Liter Tris-ethylhexylphosphat pro 1 Mol Metallionen (Ce, Tb und La zusammen) eingesetzt, beispielsweise:
300 ml Tris-ethylhexylphosphat + 20 mmol Cerchlorid + 22,5 mmol Lanthanchlorid + 7,5 mmol Terbiumchlorid. Dies entspricht einen Molverhältnis Tris-Ethylhexylphosphat zu Metall von etwa 13 : 1. Abhängig von der Wahl des Trialkylphosphates bzw. Trialkylphosphanes, insbesondere von der Länge des Alkylrestes oder der Art der funktionellen Gruppen an den Alkylresten kann die Verwendung so großer Mengen ungünstig sein;

Dies ist z. B dann der Fall, wenn das Ausfällen der Nanopartikel nur unvollständig oder nur unter Einsatz sehr großer Lösungsmittelmengen gelingt oder wenn die Substanzen sehr teuer oder aufwendig zu synthetisieren sind, was insbesondere bei funktionalisierten Trialkylphosphaten undphosphanen vorkommt.

Wenn daher in erfindungsgemäss besonders bevorzugter Weise ein Trialkylphosphat oder ein Trialkylphosphan als Steuerkomponente bei der Bildung der Nanopartikel verwendet wird, und dabei pro Mol Metallionen weniger als 10 Mol, bevorzugt 0,9 bis 5 Mol, und besonders bevorzugt 0,95 bis 1,5 Mol an Steuerkomponente verwendet wird, so kann die Synthese vereinfacht und verbilligt werden, da geringere Quantitäten der Wachstumssteuerkomponenten eingesetzt werden. Diese Bereich gelten universell für alle offenbarten Substanzklassen von Nanopartikeln.

In diesen Fällen können Lösungsmittelgemische eingesetzt werden, die also nur einen relativ kleinen Anteil an Trialkylphosphat bzw. Trialkylphosphan enthalten; die untere Grenze liegt dabei bei etwas unterhalb einem Mol Trialkylphosphat bzw. Trialkylphosphan pro Mol Metallionen (also 1:1 nach obiger Nomenklatur).

Erfindungsgemäß werden die weiteren Komponenten des Lösungsmittelgemisches dabei bevorzugt so gewählt, daß der Siedepunkt des Gemisches bei einer Temperatur liegt, die für Bildung der Nanokristalle ausreichend hoch ist, hier als Synthesemindesttemperatur bezeichnet. Die Menge der weiteren Komponenten ist dabei so hoch, daß das Synthesegemisch die bei der Synthesereaktion gebildeten Nanopartikel in Lösung zu halten vermag.
Bevorzugt sind dabei solche Komponenten, die sich während der Reaktionsdauer möglichst wenig zersetzen.
Besonders bevorzugt sind Komponenten, die sich nach Reaktionsende unter verminderten Druck unzersetzt abdestillieren lassen, und zwar mittels einfacher, laborüblicher Methoden, wie etwa Ölpumpenvakuum, nicht besser als 0,01 mbar; Wasser- oder Ölbad, d.h. einer Destillationstemperatur nicht über 200 °C, entsprechend etwa ca. 480 Kelvin.

Desweiteren kann in bevorzugter Weise wenigstens eine weitere, vorzugsweise metallkomplexierende, Komponente zur Synthesemischung zugefügt werden, vorzugsweise, um in Metallsalzausgangsverbindungen vorhandenes Kristallwasser zu verdrängen, insbesondere eine
a) Etherverbindung, bevorzugt Dipentylether, Dihexylether, Diheptylether, Dioctylether, Dibenzylether, Diisoamylether, Ethylenglykoldibutylether, Diethylenglykoldibutylether, oder Diphenylether, oder / und
b) eine über der Synthesemindesttemperatur siedenden Alkanverbindung, bevorzugt Dodekan oder Hexadekan, (nicht metallkomplexierend), beispielsweise zur Verdünnung der Reaktionsmischung, oder / und
c) eine Aminverbindung, bevorzugt Dihexylamin, Bis-(2-ethylhexyl)amin, Trioctylamin, Tris-(2-ethylhexyl)amin.

Wenn in weiter vorteilhafter Weise R1, R2, oder R3 verzweigte oder unverzweigte Alkanketten sind, die wenigstens eine Carboxylgruppe (-COOH), Carbonsäureestergruppe (-COOR), Aminogruppen (-NH₂) und (-NHR), Hydroxylgruppe (-OH), Cyanogruppe (-CN), Mercaptogruppe (-SH), Brom (-Br) und Chlor (-C1) oder Kombinationen aus diesen Gruppen tragen, so können die Wachstumssteuerkomponenten sehr flexibel funktionalisiert werden. Daher können Nanopartikel vieler verschiedener Stoffklassen, (Phosphate, Halophosphate, Arsenate,...) wie eingangs erwähnt, gezielt synthetisiert werden. Dennoch bleibt die Synthese relativ preisgünstig, da relativ geringe Mengen an teuren Steuerkomponenten verwendet werden müssen.

Als Kationquelle kann bevorzugt ein Chlorid, etwa LaCl₃ für Lanthanphosphatnanopartikel, oder Bromide, Iodide, Alkoxide, oder Acetylacetonat als Ausgangsstoff verwendet werden.

In weiterer, bevorzugter Ausbildung des erfindungsgemässen Syntheseverfahrens kann es über die Grundschritte (siehe oben) hinaus die folgenden zusätzlichen Schritte enthalten:
a) Herstellen einer ersten Lösung des Kationausgangsstoffes in einem - vorzugsweise niederen - Alkohol, insbesondere Methanol, wobei vorzugsweise ein Metallsalz verwendet wird, das nichtoxidierend und in der Synthesemischung löslich ist, und
b) Mischen der ersten Lösung mit dem bereits vorhanden Lösungsmittel, das wenigstens eine das Kristallwachstum der Nanopartikel steuernde, beispielsweise eine phosphororganische Verbindung enthaltende Komponente aufweist, zur Herstellung der metallkomplexierenden Synthesemischung,
c) Erhitzthalten der Synthesemischung unter Inertgas, insbesondere unter Stickstoff, wobei der Alkohol in bevorzugter Weise vor oder während der Synthese abdestilliert wird.

Wenn die Nanopartikel nach Ablauf der Synthesereaktion isoliert werden sollen, enthält das erfindungsgemässe Verfahren noch weitere optionale Nachbehandlungsschritte:
a) Abdestillieren einer oder mehrerer Lösungsmittelkomponenten der Synthesemischung, bevorzugt unter Vakuum, bevorzugt erst nach Ende der Synthesezeitspanne, oder /und
b) Reinigen der Nanopartikel von anhaftenden Nebenprodukten durch Abwaschen mit einem Alkohol, bevorzugt Ethanol, oder durch Diafiltration.

Das erfindungsgemässe Verfahren kann in allen Variationen je nach Säuregehalt der Synthesemischung und Art der eingesetzten Ausgangsstoffe den weiteren Schritt enthalten, die Synthesemischung mit einer in der Synthesemischung löslichen Base, bevorzugt Trihexylamin, Triheptylamin, Trioctylamin, oder Tris-(2-ethylhexyl)amin zu je nach Bedarf mehr oder weniger zu neutralisieren.

In bevorzugter Weise können als Ausgangsstoff hydratisierte Metallsalze verwendet werden, da diese oft besser löslich sind. Die Freisetzung kleiner Mengen Wasser während der Reaktion beschleunigt zudem die Zersetzung bestimmter anionenspendener Ausgangsverbindungen, wie Alkoxide und Ester, und erhöht damit die Reaktionsgeschwindigkeit.

Desweiteren können bei der Herstellung von dotierten Nanopartikeln auch mehrere unterschiedliche Metallsalze verwendet werden, wobei wenigstens ein Metall davon als Dotierungsmaterial für die herzustellenden Nanopartikel verwendet wird.

Das erfindungsgemässe Spektrum an Synthesevariationen ermöglicht ein sehr breites Einsatzgebiet, je nach Wahl der Ausgangsstoffe, und der weiteren Komponenten der Synthesemischung. Es eignet sich auch für die Synthese von Halbleiter-Nanopartikeln, insbesondere von III-V- oder von II-VI- Halbleitern.

Durch gezielten Einsatz der erfindungsgemässen Lösungsmittelkomponenten - etwa der Trialkylphosphate als Steuerkomponente für das Wachstum können nun erstmals Nanopartikel der folgenden Stoffgruppen erstmals in im Vergleich zur Hydrothermalsynthese enger Grössenverteilung mit niedrigen Maximalgröße und gleichzeitig hoher Ausbeute ohne nachträgliche Größenselektion hergestellt werden:

Dies sind die Phosphate der Seltenerdmetalle, der III. Nebengruppe und von Calcium (Ca), Strontium (Sr), Barium (Ba), mit einer oberen Teilchengrößengrenze von etwa 15 nm, vorzugsweise von 10 nm. Die Nanopartikel können so eng verteilt und mit solch geringen Grössen nur dank ihrer sehr geringen Neigung zur Agglomeration, d.h., Verwachsung der Partikel untereinander, hergestellt werden, eine vorteilhafte Wirkung, die durch den Einsatz beipielsweise der oben genannten Trialkylphosphate bei der Synthese ermöglicht wird.

Der nächste Abschnitt betrifft das Syntheseverfahren für und Anwendung von fluoreszenzfähigen Nanopartikeln und Aspekte der Dotierung im Besonderen.

Der aus dem Syntheseverfahren hervorgegangene Nanopartikelstoff kann fluoreszenzfähige Partikel enthalten, die im wesentlichen nicht 'altern', also langanhaltende Leuchteigenschaften besitzen, hitzebeständiger und resistenter gegen andere Umwelteinflüsse sind, als die auf organischen Fluoreszenzfarbstoffen beruhenden Substanzen.

Dies wird im wesentlichen durch die diesem Aspekt zugrundeliegende Idee erreicht, ein eigenes vollständiges, anorganisches Nanopartikel herzustellen, das nach passender energetischer Anregung durch passende Art von Energiezufuhr, insbesondere durch elektromagnetische Strahlen entsprechender Frequenz beispielsweise aus dem Infrarot- (IR), dem visuellen (VIS) oder dem ultravioletten (UV) Bereich, oder durch Röntgenstrahlung bzw. gegebenenfalls durch Materie- oder Elektronenstrahlen von sich aus leuchtet. Eingebunden in ein stabiles Wirtsmaterial, beispielsweise ein Wirtsgitter sind die Leuchteigenschaften äußerst stabil, selbst gegenüber erschwerten physikalischen Umgebungsparametern, wie etwa erhöhtem Druck, Temperatur, oder deren Schwankungszyklen, sowie gegenüber fluoroszenzfeindlichem, chemischen Milieu, gegenüber Photooxidation, saurer oder basischer Umgebung, organischen Lösungsmitteln, etc.

Dieser zentrale, aus der anorganischen Natur der Nanopartikel gewonnene Vorteil der erfindungsgemäßen Substanzen gegenüber handelsüblichen, organischen Fluoreszenzfarben und Fluoreszenzmarkern macht diese auch an exponierten Stellen in vielen Bereichen einsatzfähig.

Erfindungsgemäß ausgestaltbar und beansprucht sind hierin zumindest folgende Gegenstände:
Ein bevorzugtes Herstellungsverfahren für Nanopartikel vieler verschiedener Stoffgruppen, insbesondere für anorganisch dotierte Nanopartikel, und das unmittelbar daraus hergestellte Verfahrenserzeugnis;
eine generisch darstellbarem Menge von Stoffen, im Sinne von Erzeugnissen, gleich in welcher physikalischen Form vorliegend, etwa als Pulverkonzentrat, Kolloid, oder Aerosol;
ein Nanopartikelträgerstoff - im folgenden auch als NPTS abgekürzt -, der erfindungsgemäße Nanopartikel trägt, etwa in räumlich homogener oder inhomogener Verteilung, so daß eine Inkorporierung in den Trägerstoff im Sinne einer Einbettung, oder mehr eine Beschichtung mit diesem realisiert wird;
Gegenstände, die mit dem Trägerstoff und/ oder den dotierten Nanopartikeln bewußt versehen sind, beispielsweise zum Zwecke einer besonderen Markierung;
verschiedene Verwendungen und Anwendungsmöglichkeiten für die erfindungsgemäßen Stoffe und generell für Nanopartikel aus der Familie der Phosphore, für dotierte Nanopartikel, sowie
Detektionsverfahren zur Erkennung im Sinne von Nachweis der Fluoreszenz einer Probesubstanz als übereinstimmend mit einem vorgegebenen, erfindungsgemäßen Nanopartikeltyp, der einen Fluoreszenzemissionshauptpeak aufweist; sowie
die entsprechende Nachweisvorrichtung.

Für die oben genannten Gegenstände wird auf die nebengeordneten Ansprüche Bezug genommen.

In den Unteransprüchen finden sich vorteilhafte Weiterbildungen und Verbesserungen des jeweiligen Gegenstandes der Erfindung.

Erfindungsgemäß werden die fluoreszenzfähigen, anorganischen Nanopartikel in einer Flüssigphasensynthese mit einem organischen Lösungsmittel hergestellt, um zunächst kolloide Lösungen hochkristalliner Nanopartikel herzustellen. Diese in Lösung befindlichen Nanopartikel können in weiteren Verfahrensschritten dann ausgefällt und getrocknet werden. Je nach verwendetem Lösungsmittel, verwendeter Kationenquelle oder Anionenquelle für das Wirtsgitter und gegebenenfalls einer oder mehrerer weiterer Kationenquellen (bevorzugt Metallsalze) für das Dotierungsmaterial ergeben sich dann gewünschte Nanopartikel, und besondere Eigenschaften der Nanopartikel.

Gemäß einem weiteren Aspekt der vorliegenden Erfindung wird ein Herstellungsverfahren für fluoreszenzfähige, anorganisch dotierte Nanopartikel offenbart, wobei die Nanopartikel im Endprodukt in einem Wirtsmaterial mit wenigstens einem Dotanden enthalten sind, und wobei ein organisches Lösungsmittel, vorzugsweise wie es oben bereits beschrieben wurde, für eine Flüssigphasensynthese der Nanopartikel verwendet wird. Das Wirtsmaterial ist insbesondere ein Wirtsgitter, das Verbindungen des Typs XY enthält, wobei X ein Kation aus einem oder mehreren Elemententen der Hauptgruppen 1a,2a, 3a; 4a, der Nebengruppen 2b, 3b, 4b, 5b, 6b, 7b oder der Lanthaniden des Periodensystems ist, und Y entweder ein mehratomiges Anion aus einem oder mehreren Elementen der Hauptgruppen 3a, 4a, 5a, der Nebengruppen 3b, 4b, 5b, 6b, 7b, und oder 8b sowie Elementen der Hauptgruppen 6a, und oder 7, oder ein einatomiges Anion aus der Hauptgruppe 5a, 6a oder 7a des Periodensystems ist.

Das Endprodukt des erfinderischen Verfahrens und seiner Abwandlungen ist jeweils ein Stoff d.h., eine Substanz, für den hierin ein absoluter, vom Herstellungsverfahren unabhängiger Stoffschutz beansprucht wird.

In bevorzugter Weise kann ein Wirtsmaterial Verbindungen aus der Gruppe der Sulfide, Selenide, Sulfoselenide, Oxysulfide, Borate, Aluminate, Gallate, Silikate, Germanate, Phosphate, Halophosphate, Oxide, Arsenate, Vanadate, Niobate, Tantalate, Sulfate, Wolframate, Molybdate, Alkalihalogenate sowie andere Halogenide oder Nitride enthalten.

Des weiteren wird gemäß dem vorgenannten ersten Aspekt der vorliegenden Erfindung als Dotierung ein oder mehrere Elemente aus einer Menge enthaltend Elemente der Hauptgruppen 1a, 2a oder A1, Cr, T1, Mn, Ag, Cu, As, Nb, Ni, Ti, In, Sb, Ga, Si, Pb, Bi, Zn, Co und oder Elemente der Lanthaniden verwendet.

Bevorzugt kann, ggf. pro gewünschter Fluoreszenzfarbe, ein aufeinander abgestimmtes Dotandenpärchen, insbesondere Cer und Terbium, mit gutem Energieübertrag verwendet werden, wobei der eine als Energieabsorber, insbesondere als UV-Lichtabsorber und der andere als Fluoreszenzlichtemitter wirkt.

Prinzipiell können als Material für die dotierten Nanopartikel folgende Verbindungen gewählt werden, wobei in der folgenden Notation links vom Doppelpunkt die Wirtsverbindung und rechts vom Doppelpunkt ein oder mehrere Dotierelemente aufgeführt sind. Wenn chemische Elemente durch Kommata voneinander getrennt und eingeklammert sind, können sie wahlweise verwendet werden. Eine erste Auswahlliste ist wie folgt definiert, wobei je nach gewünschter Fluoreszenzeigenschaft der herzustellenden Nanopartikel eine oder auch mehrere der zur Auswahl gestellten Verbindungen herangezogen werden können:
LiI:Eu; NaI:Tl; CsI:Tl; CsI:Na; LiF:Mg; LiF:Mg,Ti; LiF:Mg,Na; KMgF₃:Mn; Al₂O₃:Eu; BaFCl:Eu; BaFCl:Sm; BaFBr:Eu; BaFCl_{0,5}Br_{0,5}:Sm; BaY₂F₈:A(A= Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; (BaMgAl₂O₄:Eu; Ba₂P₂O₇:Ti; (Ba, Zn, Mg)₃Si₂O₇:Pb; Ce(Mg, Ba) Al₁₁O₁₉; Ce_{0,65}Tb_{0,35}MgAl₁₁O₁₉; MgAl₁₁O₁₉:Ce,Tb; MgF₂:Mn; MgS:Eu; MgS:Ce; MgS:Sm; MgS(Sm, Ce); (Mg, Ca)S:Eu; MgSiO₃:Mn; 3,5Mg0.0,5MgF₂GeO₂:Mn; MgWO₄:Sm; MgWO₄:Pb; 6MgOAS₂O₅:Mn; (Zn, Mg)F₂:Mn; (Zn, Be)SO₄:Mn; Zn₂SiO₄:Mn; Zn₂SiO₄:Mn,As; ZnO:Zn; ZnO:Zn, Si, Ga; Zn₃(PO₄)₂:Mn; ZnS:A (A=Ag, Al, Cu); (Zn, Cd)S:A (A=Cu, Al, Ag, Ni); CdBO₄:Mn; CaF₂:Mn; CaF₂:Dy; CaS:A (A=Lanthanide, Bi); (Ca, Sr)S:Bi; CaWO₄:Pb; CaWO₄:Sm; CaSO₄:A (A= Mn, Lanthanide); 3Ca₃(PO₄)₂Ca(F, Cl)₂:Sb, Mn; CaSiO₃: Mn, Pb; Ca₂Al₂Si₂O₇:Ce; (Ca, Mg)SiO₃:Ce; (Ca, Mg)SiO₃:Ti; 2SrO6(B₂O₃)SrF₂:Eu; 3Sr₃(PO₄)₂.CaCl₂:Eu; A₃(PO₄)₂.ACl₂:Eu (A=Sr, Ca, Ba); (Sr,Mg)₂P₂O,:Eu; (Sr, Mg)₃(PO₄)₂:Sn; SrS:Ce; SrS:Sm,Ce; SrS:Sm; SrS:Eu; SrS:Eu,Sm; SrS:Cu,Ag; Sr₂P₂O₇:Sn; Sr₂PO₇ :Eu; Sr₄Al₁₄O₂₅:Eu; SrGa₂S₄:A (A=Lanthanide, Pb); SrGa₂S₄:Pb; Sr₃Gd₂Si₆O₁₈:Pb, Mn; YF₃:Yb, Er; YF₃:Ln (Ln=Lanthanide); YLiF₄: Ln (Ln=Lanthanide ); Y₃Al₅O₁₂:Ln ( Ln=Lanthanide ) ; YA13(BO...)3:,Nd,Yb; (Y,Ga)BO₃:Eu; (Y,Gd)BO₃:Eu; Y₂Al₃Ga₂O₁₂: Tb; Y₂SiO₅:Ln (Ln=Lanthanide); Y₂O₃ : Ln (Ln=Lanthanide) ; Y₂O₂S:Ln (Ln=Lanthanide); YVO₄:A (A=Lanthanide, In); Y(P,V)O₄:Eu; YTaO₄ :Nb; YAlO₃ : A (A= Pr, Tm, Er, Ce); YOC1: Yb, Er; LnPO₄ : Ce, Tb (Ln=Lanthanide oder Mischungen von Lanthaniden); LuVO₄:Eu; GdVO₄ : Eu; Gd₂O₂S : Tb; GdMgB₅O₁₀: Ce , Tb ; LaOBrTb; La₂O₂S :Tb; LaF₃ : Nd, Ce; BaYb₂F₈:Eu; NaYF₄ : Yb, Er; NaGdF₄:Yb,Er; NaLaF₄:Yb,Er; LaF₃:Yb,Er,Tm; BaYF₅:Yb,Er; Ga₂O₃:Dy; GaN:A (A= Pr, Eu, Er, Tm); Bi₄Ge₃O₁₂; LiNbO₃:Nd,Yb; LiNbO₃:Er; ^{.}LiCaAIF₆:Ce; LiSrAlF₆:Ce; LiLuF₄:A (A= Pr, Tm, Er, Ce); GD₃Ga₅O₁₂:Tb; GD₃Ga₅O₁₂:Eu; Li₂B₄O₇:Mn; SiOₓ:Er,Al (0<x<2).

Eine zweite Auswahlliste ist wie folgt definiert:
YVO₄:Eu; YVO₄:Sm; YVO₄:Dy; LaPO₄:Eu; LaPO₄:Ce; LaPO₄:Ce,Tb; ZnS:Tb; ZnS:TbF₃; ZnS:Eu; ZnS:EuF₃; Y₂O₃:Eu; Y₂O₂S:Eu; Y₂SiO₅:Eu; SiO₂:Dy; SiO₂:Al; Y₂O₃:Tb; CdS:Mn; ZnS:Tb; ZnS:Ag; ZnS:Cu; Ca₃(PO₄)₂:Eu²⁺; Ca₃(PO₄)₂:Eu²⁺, Mn²⁺ ; Sr₂SiO₄:Eu²⁺ ; oder BaAl₂O₄:Eu²⁺.

Eine dritte Auswahlliste für die dotierten Nanopartikel ist wie folgt definiert:
M₉F₂:Mn; ZnS:Mn; ZnS:Ag; ZnS:Cu; CaSiO₃:A; CaS:A; CaO:A; ZnS:A; Y₂O₃:A oder MgF₂:A, wobei A ein Element der Lanthaniden ist.

Ein weiterer Aspekt der vorliegenden Erfindung ist dadurch gekennzeichnet, daß in dem erfindungsgemäßen Herstellungsverfahren Metallchloride zur Gewinnung des kationischen Bestandteils des Wirtsmaterials, oder ein Phosphatsalz zur Gewinnung seines anionischen Bestandteils verwendet werden, und ein Säurefänger, bevorzugt ein Amin, besonders bevorzugt Tioctylamin (C₂₄H₅₁N) zur Synthese hinzugefügt wird. Verwendet man statt der im Stand der Technik beschriebenen Nitratsalze Chloridsalze, kann die Ausbeute des Materials, bezogen auf die Menge der eingesetzten Metallsalze um mehr als 70 % auf ca. 80% gesteigert werden, was ein Herstellungsverfahren im industriellen Maßstab ermöglicht

Damit läßt sich insbesondere ein wirtsmaterial mit einem metallischen Kation und Phosphor als Bestandteil des anionischen Teils des Wirtsgitters in vorteilhafter Weise herstellen.

Neben den zuvor genannten phosphororganischen Verbindungen Phospphinsäureester, Phophonsäurediester, Phosphorsäuretriester (Trialkyphosphate) als Wachstumssteuerkomponente können gemäß dem oben genannten Aspekt der vorliegenden Erfindung die folgenden chemischen Substanzen in bevorzugter Weise als Lösungsmittel oder Komponente davon bei der Gewinnung der erfindungsgemäßen Nanopartikel verwendet werden:
Phosphorsäureamid, bevorzugt Hexamethylphosphorsäuretriamid, ein Phosphoramidoxid, bevorzugt Tris-(dimethylamino)-phosphinoxid, Trisethylhexylphosphat, Trialkylphosphin, insbesondere bevorzugt Trioctylphosphin, hier auch als TOP abgekürzt, und bevorzugt Trioctylphosphinoxid, hier auch als TOPO abgekürzt, beide kommerziell erhältlich von der Firma Sigma Aldrich Chemie GmbH, Deisenhofen, Deutschland, Phosphoramid, bevorzugt Tris-(dimethylamino)-phosphin, Phosphoramidoxid, bevorzugt Tris-(dimethylamino)-phosphinoxid.

Die vorgenannten, bevorzugten Lösungsmittel können in vorteilhafter Weise zur Gewinnung von LAPO₄ als besonders bevorzugtem Wirtsmaterial herangezogen werden. Ein LaPO₄ Wirtsgitter kann in bevorzugter Weise derart dotiert werden, daß als Dotierung zwei Elemente in unterschiedlichen relativen Konzentrationen zueinander verwendet werden, wobei das eine Dotierelement ein lokales Maximum des Absorptionsspektrums für Licht, bevorzugt UV-Licht besitzt, und das andere Dotierelement ein Fluoreszenzemissionsspektrum hat, das mindestens ein lokales Maximum aufweist, das einen Abstand △λ/ λ vom Absorptionsmaximum des ersten Dotierelements von wenigstens 4%, bevorzugt von mehr als 20% aufweist.

Durch eine solche Maßnahme kann sichergestellt werden, daß die dotierten Nanopartikel durch nicht sichtbares Licht angeregt werden und Fluoreszenzstrahlung im sichtbaren Bereich des Lichts abgeben. Somit stört das Anregungslicht nicht das emmittierte Fluoreszenzlicht. Eine solche Maßnahme empfiehlt sich insbesondere im Bereich von Sicherheitsmarkierungen, auf die weiter unten näher eingegangen wird. Durch geschickte Wahl der Dotanden kann außerdem ein ganz spezieller Anregungssprektralbereich gewählt werden, beispielsweise im UV-C-Bereich um 250 Nanometer herum.

Das mit der Verwendung des vorerwähnten TOP/TOPO als Lösungsmittel verbesserte Verfahren kann zur Gewinnung des besonders bevorzugten LaPO₄ als Wirtsmaterial herangezogen werden, das mit einem ersten absorbierenden Dotanden als Sensibilisator, besonders bevorzugt Ce³⁺ als selektiver UV-C Absorber, und einem emittierenden zweiten Dotierungsmaterial, besonders bevorzugt Tb³⁺ dotiert wird.

Wenn als Lösungsmittel TOP und/ oder TOPO verwendet wird, und eine Dotierung mit Terbium im Bereich 0,5 bis 30 Molprozent, bevorzugt 5 bis 25 Molprozent und besonders bevorzugt 13 bis 17 Molprozent erfolgt, wobei zwischen Lanthan und Cer entsprechend ein Molverhältnis im Verhältnis von 0.13 bis 7.5, bevorzugt von 0.25 bis 4, und besonders bevorzugt zwischen 0.9 bis 1.1 vorliegt, und Metallchloridsalze als Metallquelle dienen, dann lassen sich qualitativ hochwertig fluoreszierende Nanopartikel herstellen, die insbesondere für Hochsicherheitsmarkierungen vorteilhaft verwendbar sind.

Wird TOP und/ oder TOPO als Lösungsmittel während des Herstellungsverfahren verwendet, so ergeben sich gegenüber Phophorsäureestern die Vorteile einer höheren Herstellungstemperatur, von ca. 530 bis ca. 620 Kelvin, einer damit verbundenen besseren Einbindung der Dotierungssubstanz und einer daraus resultierenden hören Intensität des emittierten Lichts, was ein entscheidender Faktor für die Anwendbarkeit eines Fluoreszenzmarkers ist. Ausserdem kann bei hohen Synthesetemperaturen auch ein Wirtsgitter erfolgreich dotiert werden, selbst wenn die Atomgröße der Dotanden nur schlecht zur Ionengröße der Wirtsionen paßt. Somit können gezielt diverse Fluoreszenzfarben erzeugt werden.

Unmittelbar nach Herstellung ist die Oberfläche der Nanopartikel von einer Hülle bestehend aus Lösungsmittelresten der Wachstumssteuerkomponenten, beispielsweise aus Trioctylphosphin, hier auch als TOP abgekürzt, und Trioctylphosphinoxid, hier auch als TOPO abgekürzt, oder eines der anderen, oben beschriebenen, umgeben. Dies ermöglicht einen vereinfachten Umgang mit den Nanopartikeln im Anschluß an deren Herstellung, da durch diese Oberflächenmoleküle (Lösungsmittelreste) eine verbesserte Löslichkeit in handelsüblichen Lösungsmitteln vermittelt wird, ohne die Teilchen in einem zweiten aufwendigen Schritt chemisch zu verändern.

Der aus dem Verfahren gewonnene Nanopartikelstoff kann nach Ausfällen und Trocknen, beispielsweise durch Heißluft als weich zerbröselbares, sehr feinkörniges Pulverkonzentrat vorliegen, das dann seinerseits in eine Vielzahl von Trägerstoffen eingebettet werden kann, je nachdem, wie es der jeweilige Anwendungsfall erfordert. Damit können die Nanopartikel in Folien eingearbeitet werden, beispielsweise bei Aluminiumfolien durch Einwalzen, oder bei Polymerfolien, etwa aus Polyethylen oder Polypropylen, etc., durch Einbringen im flüssigen Polymerzustand.

Der erfindungsgemäße Stoff ist anorganisch und daher resistent gegen Ausbleichen. Damit ist er auch unter extremen Bedingungen wie Temperaturen von nahe 0 (Null) Kelvin bis ca. 400 Kelvin mit guter Ausbeute, ohne den Verbund mit einem weiteren Schutzmaterial sowie in organischen und wäßrigen Lösungsmitteln einsetzbar.

Es tritt keine Konzentrationslöschung bei hohen Partikelkonzentrationen im Gegensatz zu organischen Fluoreszenzmarkern auf.

Das Material kann durch nachträgliche chemische Modifikation der Oberfläche an die Lösungsbedingungen in verschiedenen Lösungsmitteln angepaßt werden.

Der aus dem Verfahren gewonnene Nanopartikelstoff kann des weiteren als Kolloid in einer Trägerflüssigkeit, insbesondere in einem Lack oder einer Farbenflüssigkeit vorliegen, oder als Feinstaub / Aerosol in einem Trägeraerosol oder Gas.

Der aus Sicht der Anwendung wesentliche Kernpunkt der vorliegenden Erfindung ist die Art des emittierten Lichtes der erfindungsgemäß hergestellten Nanopartikel. Die Emissionslinien, d.h., die Wellenlängenverteilung des emittierten Lichts der oben beschriebenen Dotierungsatome aus den Seltenerdelementen sind äußerst schmal und liegen im Gegensatz zum Anregungslicht im sichtbaren Bereich.

Daraus folgt eine charakteristische Eigenschaft des jeweiligen Nanopartikeltyps, die sich aus der spezifischen Farbe und der spezifischen Halbwertsbreite des emittierten Lichts des oder der - einer Mehrzahl von - gezielt auswählbaren Emitterdotanden ergibt. Diese Eigenschaften sind derzeit mit keinem anderen Material außer den beanspruchten seltenerddotierten Substanzen erreichbar. Auch die gezielt ausübbare Auswahl des Absorptionsdotanden, wie oben bevorzugt mit dem Element Cer erwähnt, ergänzt die Originalität im Sinne einer Unverwechselbarkeit mit anderen fluoreszierenden Substanzen. Diese Tatsache kann in vorteilhafter Weise bei Hochsicherheitsmarkierungen ausgenutzt werden.

Gemäß einem weiteren Aspekt der vorliegenden Erfindung können nun die als sogenannte Phosphore, siehe "Ullmanns Encyclopedia of Industrial Chemistry, WILEY- VCH, 6th Edition, 1999, Electronic Release, Luminescent Materials: 1 Inorganic Phosphors", bekannten Verbindungen nicht mehr nur wie im Stand der Technik als Makromaterial - auch als sogenanntes bulk Material bezeichnet - hergestellt werden, sondern auch als Nanopartikel auf einfache Weise, da ohne Autoklaven, und damit wirtschaftlich hergestellt werden.

Im wesentlichen unterbleiben dabei die für eine Dotierung von Nanopartikeln notwendigen und spezifischen Arbeitsschritte. Für den Rest des Verfahrens - Synthese in organischem Lösungsmittel aus den Ausgangsstoffen, wie sie vorher beschrieben wurden, kann daher auf die Beschreibung des Herstellungsverfahrens für die anorganisch dotierten Nanopartikel verwiesen werden.

Daraus ergibt sich eine neue Verwendungsmöglichkeit dieser Menge von Stoffen - oben als Phosphore bezeichnet - als Nanopartikel insbesondere zur Markierung von Gegenständen, und zwar mit oder ohne eigenständige Dotierung.

Dabei können Größenbereiche der Nanopartikel von 1 nm bis etwa 1000 nm gezielt herbeigeführt werden, insbesondere unter Ausschluß von Sauerstoff oder Wasser oder Wasserdampf während der Synthese. Dabei liegt erfindungsgemäß eine enge Größenverteilung vor, wie nachfolgend näher erläutert wird.

Je nach eingesetzten Steuerkomponenten des Lösungsmittels ist eine sehr einheitliche Größe der Nanopartikel erreichbar. Sogar homogen kleine Nanopartikel sind erfindungsgemäss herstellbar in einem Größenbereich von 1 bis 8 nm, bevorzugt in einem Mittenbereich von 4-5 nm, mit einer Standardbweichung geringer als 30 %, bevorzugt geringer als ca. 10%. Damit können die Nanopartikel in sehr fein strukturierte Trägermaterialien eingebaut werden, ohne die Trägerstruktur merkbar zu verändern, so wie es der jeweilige Anwendungszweck gerade erfordert, z.B., bei der Einbettung in sehr dünne und/ oder sehr weiche Polymerfolien.
Beispielsweise bleiben Folien transparent, und werden nicht getrübt, wie es bei grösseren ( ab ca. 50 nm) Partikeln der Fall wäre.

Dies gilt im Besonderen für die Nanopartikel aus der Stoffgruppe der Phosphate der Seltenerdmetalle, oder Phosphate der III. Hauptgruppe, oder Phosphate von Calcium (CA), Strontium (Sr), oder Barium (Ba),
wobei die Nanopartikel eine Ausdehnung aufweisen von maximal 15 nm, bevorzugt maximal 10 nm, längs ihrer längsten Achse besitzen, und am meisten bevorzugt 4 bis 5 nm mit einer Standardabweichung geringer als 30 %, bevorzugt geringer als 10%.

Durch die oben erwähnte Möglichkeit, die Familie der Phosphore als Nanoteilchen herzustellen, eröffnet sich erfindungsgemäß insbesondere die Verwendung von Phosphoren, insbesondere Phosphate enthaltenden Nanopartikeln, bevorzugt die Verwendung von dotierten Nanopartikeln, und besonders bevorzugt, die oben beschriebenen, anorganisch dotierten Nanopartikel als Fluoreszenzmarker im allgemeinen, um beliebige Gegenstände, insbesondere Informationsträger wie etwa CDs, Computerbauteile, Fahrzeugbauteile, Motorenteile, Dokumente, Schließanlagen, Diebstahlsicherungseinrichtungen, für sichtbares Licht transparente Gegenstände, etwa Fensterscheiben, Brillengläser, Kontaktlinsen oder transparente Schirme zu kennzeichnen, und im Besonderen in dem Bereich der Hochsicherheitsmarkierung, wie es z.B. bei Geldscheinen, Schecks und Scheckkarten sowie Kunstgegenständen und Schmuck erforderlich bzw. wünschenswert ist.

Durch Einbettung der oben genannten Gruppen von Nanopartikeln oder diese tragende Nanopartikelträgerstoffe in Markierungsgegenstände, sei es als Beschichtung oder Folienüberzug, oder als aufgebrachte Lackierung können erfindungsgemäß beliebige Gegenstände je nach den Erfordernissen des Einzelfalles herstellungstechnisch günstig markiert werden, ohne das äußere Erscheinungsbild des Gegenstands oder dessen Haptik oder andere gegenstandsbezogenen Eigenschaften zu stören.

In bevorzugter Weise sind die Nanopartikel derart in den Markierungsgegenstand inkorporiert oder mit ihm verbunden, dass die erfindungsgemäßen Partikel oder erfindungsgemäße Substanz durch vorbestimmbare Energiezufuhr, bevorzugt durch eine elektromagnetische Bestrahlung, insbesondere Strahlung mit einer Wellenlänge kleiner als 300 nm, oder durch Bestrahlung mit Teilchen oder Elektronen, anregbar ist, und eine extern vom Gegenstand nachweisbare Fluoreszenzemission, bevorzugt im sichtbaren Bereich des Lichts, oder im UV- oder nahen IR-Bereich (NIR) bewirkt.

Dabei kann im Grundsatz ein oder mehrere Nanopartikeltypen so gewählt werden, daß die an die Markierung gestellten, speziellen Anforderungen erfüllt sind. Insbesondere können ein oder mehrere Anregungsspektralbereiche von ihrer Lage im Spektrum und von ihrer Bandbreite her bewußt ausgewählt werden. Ebenso kann das Fluoreszenzspektrum gezielt ausgewählt werden, einfarbig, mehrfarbig, sichtbar (VIS), oder nicht sichtbar und nur durch gezielte Hilfsmittel detektierbar, etc..

Außerdem können Flüssigkeiten und Gase zum Zwecke der Prüfung, ob ein solcher Stoff irgendwo vorhanden ist oder nicht, markiert werden, wenn der NPTS in das betreffende Medium eingebracht wird. Das kann im Zuge von Sicherheitsüberprüfungen, wie bei Rißprüfungen bei Flugzeugen, Pipelines, Wasserleitungen und anderen, Flüssigkeiten führenden Systemen relevant sein. Der Vorteil liegt dabei in den speziellen unverwechselbaren Eigenschaften des Materials, wodurch das Prüfmedium gut verfolgbar ist.

Das Material ist vollständig transparent, streufrei und farblos und kann damit überall unerkannt appliziert werden.

Auch im Bereich der Produktrückführung vom Verbraucher zum Hersteller und der damit verbundenen notwendigen eindeutigen Kennzeichnung durch den Hersteller empfiehlt sich eine Kennzeichnung, die für den Normalbetrachter nicht sichtbar ist, sondern erst nach einer Anregung durch besondere Energieformen, wie etwa UV-C-Licht mit beispielsweise 250 nm Wellenlänge.

Im Bereich der Hochsicherheitsmarkierung kann das Material - wenn gewünscht und derartig hergestellt, beispielsweise im Falle einer Cer/Terbium Dotierung von LaPO₄ nur mit einer speziellen W-C-Lampe von 255 nm Wellenlänge zur Fluoreszenz angeregt und eine entsprechende Markierung sichtbar gemacht werden. Sogenannte Schwarzlichtlampen, deren Emission bei 366 nm liegt, sind für eine solche Anregung ungeeignet.

Eine solche Verwendung kann beispielsweise durch Einbindung des Markerstoffs in ein im Anregungsspektralbereich offenen, d.h., transparenten Material, bevorzugt in ein im UV-C Bereich (Wellenlänge <300 nm) offenes Polymer, wie es z.B. bei handelsüblichem Polypropylen oder Polyethylen etc. der Fall ist. Ebenso können Metallfolien verwendet werden, sofern sie dieser Bedingung genügen. Je geringer die Dicke der Folie, umso weniger wichtig wird dieses Kriterium, da bei extrem dünnen Folien die eingebetteten Nanopartikel sehr oberflächennah liegen, so daß praktisch immer eine gewisse Anregung stattfinden kann.

Anregungswellenlänge und Emissionswellenlänge liegen in vorteilhafter Weise bei Verwendung eines passenden Dotierungspärchens bis zu 400 nm auseinander. Das ermöglicht eine unverwechselbare Detektion der Emissionswellenlänge ohne störendes Anregungslicht. Dabei ist eine Anregung im UV-C-Bereich bei etwa 255 nm oder eine im Infrarotbereich bevorzugt, da sie beide nicht in dem sichtbaren Bereich liegen und relativ einfach in der Handhabung sind.

Es lassen sich auch Druckmedien, also etwa Papier, Folien, etc., mit den erfindungsgemäßen Nanopartikeln etwa unter Verwendung entsprechender Schablonen und Aufsprühen einer Trägerflüssigkeit versehen, die erst nach erfolgter Anregung entsprechende Muster, Bilder, etc., bestimmter Art farbig oder mehrfarbig zeigen, die vorher unsichtbar sind.

Im Bereich der Optoelektronik können selbst Photozellen und andere lichtsensible Bauteile mit der erfindungsgemäßen Substanz beschichtet werden, da die Fluoreszenz erst in einem Bereich außerhalb des Normalbetriebs des Bauteils auftritt, ohne den Normalbetrieb zu stören.

Damit ein Authentifizierungsnachweis für eine Markierung nicht durch manuelle, aufwendige Spektralanalyse erfolgen muß, wird erfindungsgemäß folgendes und in vorteilhafter Weise automatisierbares Detektionsverfahren vorgeschlagen, um schnell und einfach zu erkennen, ob eine bestimmte Probe oder Probesubstanz mit einem vorgegebenen Nanopartikeltyp markiert ist oder nicht:
Das erfindungsgemäße Detektionsverfahren zur Erkennung der Fluoreszenz einer Probesubstanz als übereinstimmend mit einem vorgegebenen Nanopartikeltyp (Referenzsubstanz) erfordert in seiner einfachsten Variante einen Fluoreszenzemissionshauptpeak der dem für den Nanopartikeltyp charakterischen Emitterdotanden entspricht. Das Detektionsprinzip besteht im Wesentlichen aus der Anwendung von bis zu drei Interferenzfiltern, die speziell für eine bestimmte Wellenlänge offen sind. Da das Emissionslicht ausgesprochen schmalbandig ist, erfolgt die Erkennung über eine Vergleichsmessung in engem Abstand. Mißt die Apparatur ca 1-10 nm links und rechts neben der Emissionshauptline mehr als 10 - 50 % bevorzugt mehr als 5 - 20 % der Intensität der Hauplinie, so liegt eine Fälschung vor. Diese einfache Verfahrensvariante enthält dann die folgenden, wesentlichen Schritte:
   Anregen der Substanz mit einem für den vorgegebenen Nanopartikeltyp als erfolgreich bekannten Anregungsspektrum, wie weiter oben bereits erwähnt wurde,
   Filtern des Hauptpeakspektralbereichs, beispielsweise mit einem geeignet eingerichteten Interferenzfilter,
   Filtern wenigstens eines Nebenspektralbereichs neben dem Hauptpeak, bei dem für den vorgegebenen Nanopartikeltyp höchstens geringe Intensität erwartet wird, beispielsweise ebenfalls mit einem entsprechend eingestellten Interferenzfilter,
   Quantifizieren der gefilterten Strahlungsintensitäten in den vorgegebenen Spektralbereichen, beispielsweise mit einer Mehrzahl von photosensitiven Elementen, beispielsweise Photozellen, von denen jeweils eine optisch direkt einem jeweiligen Interferenzfilter gekoppelt ist, und
   Feststellen der Relation der gefilterten Strahlungsintensitäten zueinander, beispielsweise durch Auswertung des von der Photozelle kommenden Signals, Anerkennen der Probesubstanz als übereinstimmend mit dem vorgegebenen Nanopartikeltyp, wenn die eine oder mehreren Relationen Nebenspektralbereichsstrahlüng zu Hauptpeakstrahlung kleiner ist (sind) als ein entsprechender, vorgegebener Schwellwert.

In vorteilhafter Weise kann die vorab bekannte und somit definierte Halbwertsbreite eines Hauptpeaks der Referenzsubstanz herangezogen werden, um die Schärfe des Referenzpeaks zu definieren, und um den oben erwähnten Schwellwert als Authentizitätserfordernis zu bestimmen.

Wenn der Nebenbereich nur auf einer Seite vom Hauptpeak erfasst wird, gibt es einen Schwellwert, oder im allgemeinen zwei, wenn beiderseitig vom Hauptpeak Nebenbereiche erfasst werden. Ist der Peak ausreichend symmetrisch, kann ein einziger Schwellwert genügen.

In vorteilhafter Weise werden ausser dem Hauptpeak zwei oder mehr Nebenspektralbereiche gefiltert und ausgewertet. Dies kann zu einer erhöhten Sicherheit der Detektion beitragen.

Der Vorteil an den beiden vorgenannten Varianten besteht darin, daß der Signalerfassungs- und Auswerteaufwand nur gering ist, denn das von der Photozelle kommende Signal läßt sich leicht und billig digitalisieren und computergestützt auswerten.

In einer weiteren Variante des Detektionsverfahrens wird ein gegebenenfalls vorhandenes, besonderes Bild, etwa barcodes oder komplexere Abbildungen oder Muster der Fluoreszenzstrahlungsquelle zusätzlich beispielsweise durch eine CCD Kamera erfasst und durch entsprechende Bildverarbeitungslogik vom Stand der Technik ausgewertet. Hierdurch lassen sich die Anforderungen an Fälschungssicherheit im Bereich von Hochsicherheitsmarkierungen erhöhen, denn zusätzlich zu der spektralen Übereinstimmung muß noch das Muster mit einem separat gespeicherten Referenzmuster übereinstimmen, damit das Verfahren die Markierung der Probesubstanz als authentisch mit der der Referenzsubstanz anerkennt.

Die dem Verfahren entsprechende Detektionsvorrichtung ergibt sich vom Aufbau her im wesentlichen aus den funktionalen Merkmalen, wie sie oben beschrieben wurden. Auch tragbare Detektoren können hergestellt werden, da sämtliche Elemente des Detektionssystems klein und leicht herstellbar bzw. bis auf Programmierlogik für die Signalauswertung kommerziell erwerblich sind.

Neben der oben erwähnten Verwendungsmöglichkeit für Markierungszwecke kann die erfindungsgemäßen Stoffe als Schutzschicht gegen harte UV-Strahlung und als Wandler derselben in sichtbares Licht verwendet werden, sofern sie im harten UV-Bereich Energie aufnehmen und im sichtbaren Bereich abgeben. Damit kann die Empfindlichkeit kommerzieller Detektoren in diesem Energiebereich deutlich gesteigert werden.

In Verwendung mit Sonnenkollektoren - beispielsweise, wenn die lichtaufnehmende Fläche eine erfindungsgemäße Beschichtung mit den o.g. Wandlereigenschaften besitzt - kann harte UV-Strahlung in visuelles Licht umgewandelt und damit zu einer Steigerung des Kollektorwirkungsgrades beitragen werden.

### ZEICHNUNGEN

Ausführungsbeispiele der Erfindung sind in den Zeichnungen dargestellt und in der nachfolgenden Beschreibung näher erläutert.

Es zeigen:
- Fig. 1: ein schematisches Blockschaltbild für eine erfindungsgemäße Ausführungsform einer Detektorvorrichtung gemäß einer einfacheren Form;
- Fig. 2: ein Blockschaltbild nach Fig. 1 für eine komplexere Ausführungsform;
- Fig. 3: schematisch ein Emissionsspektrum einer Referenzsubstanz und einer Probesubstanz, sowie Meßpunkte bei der Detektionsauswertung;
- Fig. 4: schematisch Oberflächenmoleküle eines dotierten Nanopartikels nach dem Herstellungsverfahren in TOP/TOPO Lösungsmittel;
- Fig. 5: zeigt beispielhaft das Absorptions-(Anregungswellenlänge) und Fluoreszenzspektrum (Emissionswellenlänge) von LaPO₄Ce:Tb in CHCl₃;

### BESCHREIBUNG DER AUSFÜHRUNGSBEISPIELE

Im folgenden wird zunächst eine detaillierte Beschreibung einer bevorzugten Ausführungsform für ein erfindungsgeinäßes Herstellungsverfahren für die beispielhafte Herstellung von LaPO₄Ce:Dy gegeben.

### 1. LaPO₄Ce:Dy

a) In einem ersten 50 ml fassenden Hauptkolben mit Intensivkühler, Temperaturfühler mit angeschlossenem Heizpilz werden 20 ml kommerziell erwerbbares TOP (90%) eingefüllt und bei ca. 323 Kelvin (K) während einer Stunde unter Rühren evakuiert.
b) In einem zweiten Kolben werden 2g TOPO und 2,3 ml TOP vermischt und das TOPO unter leichtem Erwärmen geschmolzen, so daß eine homogene Mischung entsteht.
c) In einem dritten Kolben werden die Salze LaCl₃ (0,001 mol), CeCl₃ (0,0012 mol) und DyCl₃ (0,00024 mol) mit 3 ml Methanol gelöst und anschließend in die TOP/TOPO - Mischung überführt.
d) Danach werden 0,0028 mol H₃PO₄ in den oben genannten 50 ml fassenden Kolben gegeben und bei 323 Kelvin unter Vakuum gerührt.
e) Dann wird das Methanol aus der Salz-, TOP/TOPO-, Methanol - Mischung unter Vakuum bei Raumtemperatur abdestilliert und die verbleibende Lösung in den ersten Kolben überführt.
f) Anschließend wird die Temperatur auf 533 Kelvin erhöht und über Nacht gerührt. Die so entstandenen Nanopaftikel können dann in 30 ml Toluol gelöst und mit 20 ml Methanol gefällt werden.
   Es ergibt sich eine Substanz, die dann beipielsweise unter
g) kontrollierter Zuführung von Warmluft, etwa von 310 Kelvin getrocknet werden kann, so dass sich eine Trockensubstanz ergibt.
h) Optional kann die Trockensubstanz zu einem feinen Staub mittels druck-kontrolliertem Reibens zerbröselt werden, um auch einen Feinstaub gewünschter Korngröße zu erhalten.

Im folgenden wird eine Beschreibung einer bevorzugten Ausführungsform für ein erfindungsgemäßes Herstellungsverfahrens für die beispielhafte Herstellung von LaPO₄Ce:Tb gegeben:

### 2. LaPO₄Ce:Tb

a) In einem 50 ml Hauptkolben mit Intensivkühler, Temperaturfühler mit angeschlossenem Heizpilz werden 20 ml Trisethylhexylphosphat eingefüllt und bei ca.323 K 1h unter Rühren evakuiert.
b) In einem zweiten Kolben werden 10 ml Trisethylhexalphosphat und 3,2 ml Trioctylamin vermischt und mit 0,0028 mol H₃PO₄ versetzt.
c) In einem dritten Kolben werden die Salze LaCl₃ (0,001 mol), CeCl₃ (0,0012 mol) und TbCl₃ (0,00024 mol) mit 3 ml Methanol gelöst und anschließend in den Hauptkolben überführt.
d) Haben sich die Metallsalze in Methanol vollständig gelöst, wird die Mischung in den Hauptkolben überführt und das Methanol bei 323 K abdestilliert.
e) Danach wird die Phosphorsäure enthaltende Lösung dazugegeben und der Kolben über Nacht bei Temperatur von 473 K gerührt. Wenn die Innentemperatur auf 448 K gefallen ist, wird
f) die Reaktion abgebrochen und
g) die so entstandenen Nanoteilchen können mit einem 4 fachen Überschuß an Methanol (80 ml) aus der Lösung gefällt werden.

Im folgenden werden weitere Beschreibungen zur Synthese einiger beispielhaft ausgewählter erfinderischer Substanzen gegeben: Ergänzend zu den hier gegebenen Beschreibungen kann die Offenbarung der folgenden Publikationen für Gallate bzw. Aluminate herangezogen werden:
"Synthesis of Rare Earth Gallium Garnets by the Glycothermal Method", by Inoue, M. et al., in Journal of the American Ceramic Society, Vol. 81 No.5, pp1173 - 1183;
"Synthese of submicron spherical crystals of gadolinium garnets by the glycothermal method", by Inoue, M. et al., in Journal of Materials Science Letters 14 (1995), pp.1303 - 1305;
"Synthesis of Yttrium Aluminium Garnet by the Glycothermal Method", by Inoue, M. et al., in Communications of the American Society, Vol. 74, No.6, pp1452 - 1454; und "Reactions of rare earth acetates with aluminium isopropoxide in ethylene glycol: Synthesis of the garnet and monoclihic phases of rare earth aluminates", by Inoue, M. et al., in Journal of Materials Science 33 (1998), pp 5835 - 5841.

### 3. Synthese von Y₃Al₅O₁₂:Eu-Na-noteildhen:

4.26 g (20.8 mmol) Aluminiumisopropoxid, 4.15 g (11.875 mmol) Yttriumacetat · 4 H₂O und 250 mg (0.625 mmol) Europiumacetat • 4 H₂O mit 100 ml 1,6-Hexandiol in ein Glas für den Autoklaven überführen. Das Glas in den Autoklaven stellen und mit einer Glaskappe lose verschließen. Zum wärmetransport 50 ml 1,6-Hexandiol in den Raum zwischen Auotklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, den Überdruck ablassen, dann erst öffnen. Den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Y₃Al₅O₁₂:Eu-Nanoteilchen durch Dekantieren vom Überstand trennen.

Die Reaktion funktioniert auch mit 1,4-Butandiol statt 1,6-Hexandiol, aber die Ausbeute an kleinen Teilchen wird schlechter.

### 4. Synthese von Y₃Al₅O₁₂, Nd Nanoteilchen (nicht sichtbare, infrarote Lumineszenz):

4.26 g (20.8 mmol) Aluminiumisopropoxid, 4.15 g (1-1.875 minol) Yttriumacetat · 4 H₂O und 215 mg (0.625 mmol) Neodym(III)acetat · 1,5 H₂O mit 100 ml 1,6-Hexandiol in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, den Überdruck ablassen, dann erst öffnen. Den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Y₃Al₅O₁₂:Nd-Nanoteilchen durch Dekantieren vom Überstand trennen.

Die Reaktion funktioniert auch mit 1,4-Butandiol statt 1,6-Hexandiol, aber die Ausbeute an kleinen Teilchen wird schlechter.

### 5. Synthese Y₃Al₅O₁₂:Ce Nanoteilchen (grüne Lumineszenz):

4.26 g (20.8 mmol) Aluminiumisopropoxid, 4.15 g (11.875 mmol) Yttriumacetat · 4 H2O und 215 mg ( 0.625 mmol) Cer(III)acetat 1,5 H₂O mit 100 ml 1,6-Hecandiol in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, den Überdruck ablassen, dann erst öffnen. Den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Y₃Al₅O₁₂: Ce-Nanoteilchen durch Dekantieren vom Überstand trennen.

Eigenschaften der Substanz: Sie ist gelb, nicht farblos; kann auch mit violettem Licht angeregt werden.

Die Reaktion funktioniert auch mit 1,4-Butandiol statt 1,6-Hexandiol, aber die Ausbeute an kleinen Teilchen wird schlechter.

### 6. Synthese von Gd₃Ga₅O₁₂: Tb-Nanoteilchen

3.78 g (10.4 mmol) Ga(NO₃)₃ · 6 H₂O, 2.68 g (5.9375 mmol) Gd(NO₃)₃ · 6 H₂O und 142 mg (0.3125 mmol) Tb(NO₃)₃ · 6 H₂O unter Rühren in 20 ml Wasser auflösen. Diese Lösung auf einen Satz in eine Lösung von 10 ml 25%iges Ammoniakwasser in 40 ml Wasser gießen (nicht uingekehrt!). Der pH-Wert muß größer als 10 sein, sonst noch konz. Ammoniak zugeben. Den Niederschlag abzentrifugieren, anschließend dekantieren. Den Niederschlag 5 Mal in 50-100 ml Wasser und anschließend 5 Mal in 50-100 ml Methanol aufrühren, waschen, zentrifugieren und dekantieren. Den dekantierten, aber noch methanolfeuchten Niederschlag zusammen mit 100 ml geschmolzenem 1,6-Hexandiol in eine Rückflußapparatur geben. Unter Vakuum auf 373 K erhitzen, bis alles Methanol und Wasser abdestilliert ist. Mit Inertgas, (z.B. Stickstoff oder Argon) belüften und unter Inertgasstrom 16 Stunden unter Rückfluß kochen. Den Ansatz abkühlen lassen und in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, dann den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Gd₃Ga₅O₁₂: Tb Nanoteilchen durch Dekantieren vom Überstand trennen.
Die Reaktion funktioniert auch mit 1,4-Butandiol statt 1,6-Hexandiol, aber die Ausbeute an kleinen Teilchen wird schlechter.

### 7. Synthese von Y₃Al₅O₁₂: Nd-Nanoteilchen:

3.90 g (10.4 mmol) Al(NO₃)₃ · 9 H₂O, 2.27 g (5.9375 mmol) Y(NO₃)₃ • 6 H₂O und 136 mg (0.3125 mmol) Nd(NO₃)₃ • 6 H₂O unter Rühren in 20 ml Wasser auflösen. Diese Lösung auf einen Satz in eine Lösung von 10 ml 25%iges Ammoniakwasser in 40 ml Wasser gießen (nicht umgekehrte. Der pH-Wert muß größer als 10 sein, sonst noch konz. Ammoniak zugeben. Den Niederschlag abzentrifugieren, anschließend dekantieren. Den Niederschlag 5 Mal in 50-100 ml Wasser und anschließend 5 Mal in 50-100 ml-Methanol aufrühren, waschen, zentrifugieren und dekantieren. Den dekantierten, aber noch methanolfeuchten Niederschlag zusammen mit 100 ml geschmolzenem 1,6-Hexandiol in eine Rückflußapparatur geben. Unter Vakuum auf 373 K erhitzen, bis alles Methanol und Wasser abdestilliert ist. Mit Inertgas (z.B. Stickstoff oder Argon) belüften und unter Inertgasstrom 16 Stunden unter Rückfluß kochen. Den Ansatz abkühlen lassen und in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, dann den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Y₃Al₅O₁₂:Nd-Nanoteilchen durch Dekantieren vom Überstand trennen. Die Reaktion funktioniert auch mit 1,4-Butandiol statt 1,6-Hexandiol, aber die Ausbeute an kleinen Teilchen wird schlechter.

### 8. Synthese von Y₃Al₅O₁₂:Ce-Nanoteilchen:

3.90 g (10.4 mmol) Al(NO₃)₃ · 9 H₂O, 2.27 g (5.9375 mmol) Y(NO₃)₃ · 6 H₂O und 136 mg (0.3125 mmol) Ce(NO₃)₃ **·** 6 H₂O unter Rühren in 20 ml Wasser auflösen. Diese Lösung auf einen Satz in eine Lösung von 10 ml 25%iges Ammoniakwasser in 40 ml Wasser gießen (nicht umgekehrt!). Der pH-Wert muß größer als 10 sein, sonst noch konz. Ammoniak zugeben. Den Niederschlag abzentrifugieren, anschließend dekantieren. Den Niederschlag 5 Mal in 50-100 ml Wasser und anschließend 5 Mal in 50-100 ml Methanol aufrühren, waschen, zentrifugieren und dekantieren. Den dekantierten, aber noch methanolfeuchten Niederschlag zusammen mit 100 ml geschmolzenem 1,6-Hexandiol in eine Rückflußapparatur geben. Unter Vakuum auf 373 K erhitzen, bis alles Methanol und Wasser abdestilliert ist. Mit Inertgas (z.B. Stickstoff oder Argon) belüften und unter Inertgasstrom 16 Stunden unter Rückfluß kochen. Den Ansatz abkühlen lassen und in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, dann den Inhalt des Glases in 100-250 ml Isopropanol auflösen: Den Niederschlag abzentrifugieren und mehrmals mit Isopropanol waschen. Anschließend mit dest. Wasser waschen, bis Peptisation (= kleine Teilchen lösen sich wieder) eirisetzt. Die kolloidale Lösung 60 min bei 12000 g zentrifugieren und den Niederschlag der Y₃Al₅O₁₂:Ce-Nanoteilchen durch Dekantieren vom Überstand trennen.
Die Reaktion funktioniert auch mit 1,4-Butandiol statt 1,6-Hexandiol, aber die Ausbeute an kleinen Teilchen wird schlechter.

### 9. Synthese von Y₃Al₅O₁₂:Eu-Nanoteilchen:

3.90 g (10.4 mmol) Al(NO₃)₃ · 9 H₂O, 2.27 g (5.9375 mmol) Y(NO₃)₃ · 6 H₂O und 139 mg (0.3125 mmol) Eu(NO₃)₃ · 6 H₂O unter Rühren in 20 ml Wasser auflösen. Diese Lösung auf einen Satz in eine Lösung von 10 ml 25%iges Ammoniakwasser in 40 ml Wasser gießen (nicht umgekehrt!). Der pH-Wert muß größer als 10 sein, sonst noch konz. Ammoniak zugeben. Den Niederschlag abzentrifugieren, anschließend dekantieren. Den Niederschlag 5 Mal in 50-100 ml Wasser und anschließend 5 Mal in 50-100 ml Methanol aufrühren, waschen, zentrifugieren und dekantieren. Den dekantierten, aber noch methanolfeuchten Niederschlag zusammen mit 100 ml geschmolzenem 1,6-Hexandiol in eine Rückflußapparatur geben. Unter Vakuum auf 373 K erhitzen, bis alles Methanol und Wasser abdestilliert ist. Mit Inertgas (z.B. Stickstoff oder Argon) belüften und unter Inertgasstrom 16 Stunden unter Rückfluß kochen. Den Ansatz abkühlen lassen und in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573 K hochheizen und 4 Stunden bei dieser Temperatur halten. Den Autoklaven abkühlen lassen, dann den Inhalt des Glases in 100-250 ml Is,opropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Y₃Al₅O₁₂:Eu-Nanoteilchen durch Dekantieren vom Überstand trennen. Die Reaktion funktioniert auch mit 1,4-Butandiol statt 1,6-Hexandiol, aber die Ausbeute an kleinen Teilchen wird schlechter.

### 10. Lumineszierendes und dotiertes Zinksilikat:

### Vorschrift für mangan-dotiertes Zn₂SiO₄ (3-at.%):

In ein verschließbares PE-Gefäß 2.885 g (9.7 mMol) ZN(NO₃)₂. 6H₂O und 8 g NaOH-Plätzchen geben, mit 80 ml Wasser versetzen und verschlossen über Nacht rühren. In einem zweiten PE-Gefäß, 8 g NaOH-Plätzchen in 80 ml Wasser auflösen. 1.042 g (5 mMol) Si(OC₂H₅)₄ (Tetraethoxysilan) oder 0.761 g (5 mMol= Si(OCH₃)₄ (Tetramethoxysilan) dazugeben und das Reaktionsgemisch verschlossen über Nacht rühren. 48 mg (0.3 mmol) KMnO₄ in wenig Wasser lösen. Alle drei Lösungen in den Autoklaven überführen, auf 190 ml auffüllen, den Autoklaven verschließen und 30 min Formiergas (H₂/N₂ = 10/90 oder 5/95) durchblubbern. Bei 273 K unter Rühren (600 U/min) über Nacht erhitzen. Den erhaltenen Niederschlag abzentrifugieren und mit dest. Wasser waschen, bis Peptisation (= kleine Teilchen lösen sich wieder) einsetzt. Die kolloidale Lösung 60 min bei 12000 g zentrifugieren und den Niederschlag der Nanoteilchen durch Dekantieren vom Überstand trennen.

### 11. Lumineszierendes und dotiertes Bariumsilikät:

### Vorschrift für blei-dotiertes BaSiO₃ (2-at.%):

In eine 100 ml PE-Flasche werden 1.042 g (5 mMol) Si(OC₂H₅)₄ eingewogen. 65 mg (0.16 mMol) Pb(C10₄)₂ · 3 H₂O werden in einem Becherglas in einigen Tropfen Wasser gelöst und mit 30 ml 0.1 M Ba (OH)₂-Lösung versetzt. Die klare Lösung wird zum Tetraethoxysilan gegeben. Das Becherglas wird mit weiteren 50 ml 0.1 M Ba(OH)₂-Lösung gespült, die ebenfalls in die PE-Flasche gegeben werden. Die Lösung wird 60 min in der gut verschlossenen PE-Flasche gerührt. Anschließend wird die Suspension in ein Autoklavengefäß aus Teflon gefüllt und im Autoklaven bei Temperatur von 543 K unter Rühren über Nacht erhitzt. Den erhaltenen Niederschlag abzentrifugieren und zweimal mit Wasser waschen. Anschließend mit dest. Wasser waschen, bis Peptisation (= kleine Teilchen lösen sich) einsetzt. Die kolloidale Lösung 60 min bei 12000 g zentrifugieren und den Niederschlag der Nanoteilchen durch Dekantieren vom Überstand trennen.

### 12. Lumineszierendes und dotiertes Calciumsilikat

### Vorschrift für blei-dotiertes CaSiO₃ (2-at.%):

In einen 100 ml Erlenmeyerkolben 1.042 g (5 mmol) Si(OC₂H₅)₄ einwiegen, mit 40 ml Ethanol auffüllen und rühren. 50 ml Wasser mit HNO₃ auf pH 4.5 bringen und zur gerührten Lösung geben. Den Kolben verschließen und über Nacht rühren lassen. Wenn die Lösung klar geblieben ist, einen 250 ml-Rundkolben mit 40 ml Wasser füllen und hängen. Auf der Glaswand rundherum die Lage des Miniskus mit einem wasserfesten Schreiber markieren, das Wasser ausgießen und die Lösung aus dem Erlenmeyerkolben einfüllen. Bei 313 K Badtemperatur die Lösung am Rotationsverdampfer bis auf etwa 40 ml (Markierung ! ) einengen, so daß der Alkohol entfernt ist. 1.157 g (4.9 mMol) Ca(NO₃)₂ · 4 H₂O und 33 mg (0.1 mMol) Pb(NO₃)₂ in 30 ml Wasser lösen. Diese Lösung und die Silikat-Lösung vorsichtig mit verdünnter KOH auf pH 6.0 bringen. Anschließend die Ca/Pb-Lösung zur Silikat-Lösung geben und in ein Autoklavengefäß aus Glas füllen. Verschlossen im Autoklaven bei Temperatur von 543 K unter Rühren über Nacht erhitzen. Den erhaltenen Niederschlag abzentrifugieren und zweimal mit Wasser waschen. Anschließend mit dest. Wasser waschen, bis Peptisation (= kleine Teilchen lösen sich wieder) einsetzt. Die kolloidale Lösung 60 min bei 12000 zentrifugieren und den Niederschlag der Nanoteilchen durch Dekantieren vom Überstand trennen.

### 13. GdV04:Eu-Kolloide:

### Vorschrift für Gd_{0.95}Eu_{0.05}VO₄

4.117 g (9.5 mMol) Gd(NO₃)₃ ·5 H₂O und 223 mg (0.5 mMol) Eu(NO₃)₃ · 6 H₂O in 20 ml Wasser lösen und zu 15 ml 1 M NaOH in einem Teflon-Autoklavengefäß geben. 1.820 g Na₃VO₄ · 10 H₂O (5 mmol) in 35 ml Wasser lösen und zur Lanthanid-Lösung geben. Die Lösung im Autoklaven (Teflongefäß) unter Rühren eine Stunde auf 543 K erhitzen. Den Niederschlag abfiltrieren und in 100 ml 0.5 M HNO₃, die mit 6.87 g Dequest 2010-Lösung (60%ig) (Monsanto) (20' mMol) versetzt ist, 60 min rühren. Danach mit 1 M NaOH (ca. 40-100 ml !) auf pH 5 bringen und den Niederschlag 15 min bei 4500 U/min abzentrifugieren. Anschließend mit dest. Wasser waschen, bis Peptisation (= kleine Teilchen lösen.sich wieder) einsetzt. Die kolloidale Lösung 60 min bei 12000 g zentrifugieren und den Niederschlag der Nanoteilchen durch Dekantieren vom Überstand trennen.

### 14. Lumineszierendes Calciumwolframat:

### Vorschrift:

779 mg (3.3 mMol) Ca(NO₃)₂ • 4 H₂O werden in 150 ml Wasser gelöst, die Lösung gedrittelt und mit NaOH auf pH 12 gebracht. 990 mg (3 mmol) Na₂WO₄ • 2 H₂O werden in 150 ml Wasser gelöst, die Lösung wieder auf pH 12 gebracht. Die Lösungen werden in Autoklavengefäßen vermischt, der pH-Wert, falls nötig, auf den alten Wert gebracht und im Autoklaven bei 543 K unter Rühren über Nacht erhitzt. Die erhaltenen Niederschläge werden abzentrifugiert und mit Wasser gewaschen. Anschließend solange mit dest. Wasser waschen, bis Peptisation (= kleine Teilchen lösen sich wieder) einsetzt.' Die kolloidale Lösung 60 min bei 12000 g zentrifugieren und den Niederschlag durch Dekantieren vom Überstand trennen.

### 15. Y2 (WO4) 3:Eu-Kolloide:

### Vorschrift für (Y_{0.9}Eu_{0.1})₂(WO₄)₃ :

4.948 g (15 mMol) Na₂WO₄ . 2 H₂O in 35 ml Wasser lösen und mit 5 ml 1 M NaOH auf ca. pH 13 bringen. 3.447 g (9 mmol) Y(NO₃)₃ · 6 H₂O und 446 mg (0.1 mmol) Eu(NO₃)₃ · 6 H₂O in 30 ml Wasser lösen und unter Rühren zur Wolframatlösung geben. Den pH-Wert auf ≥ 10 bringen. Die Lösung im Autoklaven bei 70 % Füllgrad unter Rühren über Nacht auf 533 KC erhitzen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Nanoteilchen durch Dekantieren vom Überstand trennen.

### 16. Lumineszierendes und dotiertes Calciummolybdat

### Vorschrift für Europium-dotiertes CaMoO₄ (5-at.%):

708 mg (3.0 mmol) Ca(NO₃)₂•4 H₂O und 74 mg (0.167 mmol) Eu(NO₃)₃•6 H₂O werden in 30 ml Wasser gelöst. 618 mg (3.5 mmol Mo) (NH₄)₆Mo₇O₂₄•4 H₂O werden in 30 ml Wasser und mit 1 M NaOH auf pH 8 gebracht. In einem Autoklavengefäß aus Teflon wird die Ca/Eu-Lösung zur Molybdat-Lösung gegeben, der pH-Wert, falls nötig, auf den alten Wert der Molybdat-Lösung gebracht und im Autoklaven bei 543 K unter Rühren über Nacht erhitzt. Die erhaltenen Niederschläge werden abzentrifugiert und mit Wasser gewaschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der Nanoteilchen durch Dekantieren vom Überstand trennen.

### 17. GdTaO₄:Tb-Kolloide:

### Vorschrift zur Herstellung von K₈Ta₆O₁₉ · 16 H₂O (Mw = 1990.07 g/mol):

Ofen auf 773 K vorheizen. 25 g KOH und 5 g Ta₂O₅ in einen Silbertiegel füllen und 30 min im Ofen zugedeckt (Ag-Blech) erhitzen (bis zum klaren Schme1zfluß !) . Währenddessen 500 ml dest. Wasser zum Sieden erhitzen. Den Tiegel aus dem Ofen nehmen, abkühlen lassen, und den Schmelzkuchen mehrmals mit wenig heißem Wasser (insgesamt etwa 50-100 ml, wenn es reiche) auslaugen. Die Lösung dabei in eine PE-Flasche (kein Glas !) füllen. Die Lösung durch ein Faltenfilter und Plastiktrichter in eine PE-Flasche filtrieren. Zum Ausfällen des Produktes die Lösung mit dem gleichen bis vierfachen Volumen an Ethanol (technisches funktioniert) versetzen. Die überstehende Lösung dekantieren, falls nötig nach Zentrifugation. Den Niederschlag noch zweimal in ca. 0.1 M KOH auflösen und mit Ehtanol ausfällen. Auf Filterpapier im Exsikkator (Kieselgel) trocknen und in eine Flasche füllen. (100% Ausbeute = 7.5 g nicht erreichbar wegen KTaO₃-Bildung)

### 1. Vorschrift für Gd_{0.95}Tb_{0.05}TaO₄:

2.058 g (4.75 mMol) Gd(NO₃)₃ 5 H20 und 109 mg (0.25 mmol) Tb(NO₃)₃ ·5 H₂O in 20 ml Wasser lösen und zu 14 ml 1 M KOH in einem Teflon-Autoklavengefäß geben. 1.66 g K₈Ta₆O₁₉ · 16 H₂O (5 mMol Ta) und 1 ml 1 M KOH in 35 ml Wasser lösen und zur Lanthanid-Lösung geben. Die Lösung im Autoklaven (Teflongefäß) unter Rühren eine Stunde auf 543 K erhitzen. Den Niederschlag abfiltrieren und in 200 ml 0.5 HNO₃ (pH 0.3), die mit 6.87 g Dequest 2010-Lösung (60%ig) (20 mmol) versetzt ist, 60 min rühren. Danach mit mehr als 1 M KOH (bei 1 M ca. 80-200 ml !) auf einen pH-Wert von 12.5 bringen, über Nacht rühren und 10 min bei 4500 U/min zentrifugieren. Den Überstand vollständig abgießen und verwerfen.

Den Niederschlag mit 40 ml Wasser äufrühren und 2 min im Ultraschallbad dispergieren. Anschließend 15 min bei 4500 U/min zentrifugieren und dekantieren (Peptisierung ?). Den Überstand aufheben. Mit dem Niederschlag das Aufrühren und Abzentrifugieren noch dreimal wiederholen-. Anschließend solange mit dest. Wasser waschen, bis Peptisation (= kleine Teilchen lösen sich wieder) einsetzt. Die kolloidale Lösung 60 min bei 12000 g zentrifugieren und den Niederschlag der Nanoteilchen durch Dekantieren vom Überstand trennen.

### 18. Herstellung von Ca₃(PO₄)₂:Eu²⁺ Nänopartikeln

300 ml Tris-(Ethylhexyl)-phosphat werden mit Stickstoff sauerstofffrei gespült und mit einer Lösung von 10.48 g von CaCl₂ . 2 H₂O (71.25 mmol), und 836 mg EuCl₂ (3.75 mmol) in 100 ml trockenem Methanol versetzt. Unter Vakuum wird bei Temperaturen von 303 bis 313 K das Methanol und das Kristallwasser abdestilliert. Anschließend werden 4.90 g (50 mmol) kristalline Phosphorsäure in einer Mischung aus 65.5 ml (150 mmol) Trioctylamin und 150 ml Tris-(Ethylhexyl)-phosphat gelöst und zum restlichen Ansatz gegeben. Die Lösung wird mehrmals evakuiert und mit Stickstoff geflutet, um Oxidation zu Eu³⁺ zu minimieren. Anschließend wird der Ansatz auf 473 K erhitzt. Während des Erhitzens zersetzt sich ein Teil des Lösungsmittels, so daß der Siedepunkt der Mischung abnimmt. Sobald der Ansatz bei einer Temperatur von 443 bis 448 K siedet, läßt man abkühlen und versetzt mit der vierfachen Menge an Methanol. Der resultierende Niederschlag wird durch Zentrifugation abgetrennt, mehrmals mit Methanol gewaschen und getrocknet.

### 19 . Herstellung von Ca₃(PO₄)₂:Eu²⁺, Mn²⁺ Nanopartikeln :

300 ml Tris-(Ethylhexyl)-phosphat werden mit Stickstoff sauerstofffrei gespült und mit einer Lösung von 9.78 g von CaCl₂ . 2 H₂O (70 mmol) , 223 mg EuCl₂ (1 mmol) , und 503 mg MnCl₂ (4 mmol) in 100 ml trockenem Methanol versetzt. Unter Vakuum wird bei Temperaturen von 303 bis 313 K das Methanol und das Kristallwasser abdestilliert. Anschließend werden 4.90 g (50 mmol) kristalline Phosphorsäure in einer Mischung aus 65.5 ml (150 mmol) Trioctylamin und 150 ml Tris-(Ethylhexyl)-phosphat gelöst und zum restlichen Ansatz gegeben. Die Lösung wird mehrmals evakuiert und mit Stickstoff geflutet, um Oxidation zu Eu³⁺ zu minimieren. Anschließend wird der Ansatz auf 473 K erhitzt. Während des Erhitzens zersetzt sich ein Teil des Lösungsmittels, so daß der Siedepunkt der Mischung abnimmt. Sobald der Ansatz bei einer Temperatur von 443 bis 448 K siedet, läßt man abkühlen und versetzt mit der vierfachen Menge an Methanol. Der resultierende Niederschlag wird durch Zentrifugation abgetrennt, mehrmals mit Methanol gewaschen und getrocknet.

### 20. Synthese BaAl₂O₄ : Eu²⁺-Nanoteilchen :

4.09 g (20 mmol) Aluminiumisopropoxid, 2.43 g /9.5 mmol) Barium-di-isopropylat und 111 mg (0.5 mmol) EuCl₂ mit 100 ml 1,6-Hexandiol in ein Glas für den Autoklaven überführen. Das Glas in den Autoklaven stellen und mit einer Glaskappe lose verschließen. Zum Wärmetransport 50 ml 1,6-Hexandiol in den Raum zwischen Autoklavenwand und Glas geben. Anschließend Autoklaven schließen, zweimal sorgfältig evakuieren und jeweils mit Stickstoff oder Argon (oder ein anderes Edelgas) befüllen. Schließlich den Autoklaven auf 573K hochheizen und 4 Stunden bei dieser Temperatur halten. Den Autoklaven abkühlen lassen, den Überdruck ablassen, dann erst öffnen. Den Inhalt des Glases in 100-250 ml Isopropanol auflösen. Den Niederschlag abzentrifugieren und mehrmals mit Isopropanol waschen. Anschließend mit dest. Wasser waschen, bis Peptisation (= kleine Teilchen lösen sich wieder) einsetzt. Die kolloidale Lösung 60 min bei 12000 g zentrifugieren und den Niederschlag der BaAl₂O₄ : Eu-Nanoteilchen durch Dekantieren vom Überstand trennen.

Die Reaktion funktioniert auch mit 1,4-Butandiol statt 1,6-Hexandiol, aber die Ausbeute an kleinen Teilchen wird schlechter.

Weitere, beispielhaft genannte, erfindungsgemässe Herstellungsformen sind die folgenden:

### 21. Mangandotierte Zinksilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dihexylether versetzen und die Alkohole am Rotationsverdampfer bei etwa 30 °C Badtemperatur abdestillieren.

1.3 g (9.5 mMol) ZnCl₂ und 99 mg (0.5 mMol) MnCl₂ · 4 H₂O in wenig Methanol auflösen und 3.3 ml (12 mmol) Tributylphosphat und 40 ml Dihexylether dazugeben. Unter Vakuum das Methanol abdestillieren. Unter Rühren 16.6 ml (38 mmol) Trioctylamin und obige Lösung von Tetrabutylammoniumsilikat-Lösung in Dihexylether dazugeben. Anschließend unter Stickstoff auf etwa 200 °C heizen und über Nacht bei dieser Temperatur rühren. Von der Lösung das Lösungsmittel (vor allem Dihexylether) unter Vakuum abdestillieren.
Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 22. Mangandotierte Zinksilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dihexylether versetzen und die Alkohole am Rotationsverdampfer bei etwa 30 °C Badtemperatur abdestillieren.

1.3 g (9.5 mMol) ZnCl₂ und 99 mg (0.5 mMol) MnCl₂ · 4 H₂O in wenig Methanol auflösen und 50 ml Bis-(2-ethylhexyl)amin dazugeben. Unter Vakuum das Methanol abdestillieren. Unter Rühren die obige Lösung von Tetrabutylammoniumsilikat-Lösung in Dihexylether dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren.
Das zurückbleibende Rohprodukt kann durch Diafiltration (Porengröße des Filters: 5000 -10000 Dalton) gegen Toluol in einer Rührzelle gereinigt und durch anschließendes Einengen der diafiltrierten Lösung am Rotationsverdampfer isoliert werden.

### 23. Bleidotierte Calciumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dibenzylether versetzen und die Alkohole am Rotationsverdampfer bei etwa 30 °C Badtemperatur abdestillieren.

1.67 g (9 . 5 mMol) Ca(CH₃COO)₂ · H₂O und 222 mg (0.5 mMol) Pb(CH₃COO)₂ · 3 H₂O in wenig Methanol auflösen und 3.3 ml (12 mmol) Tributylphosphat und 40 ml Dibenzylether dazugeben. Unter Vakuum das Methanol abdestillieren. Unter Rühren 16.6 ml (38 mmol) Trioctylamin und obige Lösung von Tetrabutylammoniumsilikat-Lösung in Dibenzylether dazugeben. Anschließend unter Stickstoff auf etwa 250 °C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 24. Cerdotierte Yttriumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dibenzylether versetzen und die Alkohole am Rotationsverdampfer bei etwa 30 °C Badteinperatur abdestillieren.

2.88 g (9.5 mmol) YCl₃ • 6 H₂O und 177 mg (0.5 mMol) CeCl₃• 6 H₂O in wenig Methanol auflösen und 3.3 ml (1.2 mmol) Triisobutylphosphat und 40 ml Dibenzylether dazugeben. Unter Vakuum das Methanol abdestillieren. Unter Rühren 16.6 ml (38 mmol) Trioctylamin und obige Lösung von Tetrabutylammoniumsilikat-Lösung in Dibenzylether dazugeben. Anschließend unter Stickstoff auf etwa 250 °C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 25. Terbiumdotierte Yttriumsilikat Nanopartikel:

2.5 Tetraethylorthosilikat mit 40 ml Ethanol vermischen und mit 7.5 ml einer 0.8 M Lösung von Tetrabutylammonium-hydroxid in Methanol versetzen. Unter Rühren 0.9 ml Wasser zugeben und verschlossen über Nacht rühren. Anschließend die Lösung mit etwa 20 ml Dioktylether versetzen und die Alkohole am Rotationsverdampfer bei etwa 30 °C Badtemperatur abdestillieren.

2.88 g (9.5 mmol) YCl₃ · 6 H₂O und 187 mg (0.5 mMol) TbCl₃ · 6 H₂O in wenig Methanol auflösen und 3.3 ml (12 mmol) Tributylphosphat und 40 ml Dibenzylether dazugeben. Unter Vakuum das Methanol abdestillieren. Unter Rühren 16.6 ml (38 mmol) Tris-(2-Ethylhexyl)amin und obige Lösung von Tetrabutylammoniumsilikat-Lösung in Dioktylether dazugeben. Anschließend unter Stickstoff auf etwa 250°C heizen und über Nacht bei dieser Temperatur rühren.
Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 26. LaBO₃:Eu Nanopartikel:

3.528 g (9.5 mmol) LaCl₃ · 7 H₂O und 183 mg (0.5 mmol) EuCl₃ · 6 H₂O in
wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren 16.6 ml (38 mmol) Trioctylamin und 14.0 ml einer 1 M Lösung von Borsäure H₃BO₃ in Dihexylether (14 mmol) dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren.
Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 27. InBO₃:Tb Nanopartikel:

2.78 g (9.5 mMol) InCl₃ · 4 H₂O und 187 mg (0.5 mmol) TbCl₃ 6 H₂O in wenig Ethanol lösen. 4.6 g (12 mmol) Trioctylphosphanoxid (TOPO) in 40 ml Dioktylether lösen und dazugeben. Unter Vakuum das Methanol und freigesetzte Kristallwasser abdestillieren.
Zu der trüben Lösung 16.6 ml Tris-(2-Ethylhexyl)amin und 14.0 ml einer 1 M Lösung von Borsäure H₃BO₃ in Dioktylether (14 mmol) dazugeben. Anschließend unter Stickstoff auf etwa 280 °C heizen und über Nacht bei dieser Temperatur rühren. Anschließend wird die Lösung durch Diafiltration (Porengröße des Filters: 5000 -10000 Dalton) gegen Toluol in einer Rührzelle gereinigt und die Nanopartikel durch anschließendes Einengen der diafiltrierten Lösung am Rotationsverdampfer isoliert.

### 28. YBO₃:Eu Nanopartikel:

2.88 g (9.5 mMol) YCl₃ • 6 H₂O und 183 mg (0.5 mMol) EuCl₃ . 6 H₂O in
wenig Ethanol auflösen und 3.3 ml (12 mmol) Tributylphosphat und 40 ml Dihexylether dazugeben. Unter Vakuum das Ethanol und freigesetzte Kristallwasser abdestillieren.
Unter Rühren 12.9 ml (38 mmol) Trihexylamin und 14.0 ml einer 1 M Lösung von Borsäure H₃BO₃ in Dihexylether (14 mmol) dazugeben. Anschließend unter Stickstoff auf etwa 200 °C heizen und über Nacht bei dieser Temperatur rühren.
Von der Lösung den Dihexylether unter Vakuum abdestillieren. Falls erwünscht, kann das zurückbleibende Rohprodukt wie oben angegeben durch Waschen mit kleinen Mengen Ethanol, durch Diafiltration oder andere übliche Verfahren von den Nebenprodukten befreit werden.

### 29. LaAsO₄ : Eu Nanopartikel:

1.38 g As₂O₅ in ca.. 40 ml Methanol suspendieren. 1.0 ml Wasser und 3.8 ml einer 0.8 M Lösung von Tetrabutylammonium-hydroxid in Methanol zusetzen und verschlossen über Nacht rühren. Anschließend die Lösung mit etwa 20 ml Dihexylether versetzen und die Alkohole am Rotationsverdampfer bei etwa 30 °C Badtemperatur abdestillieren.

3.528 g (9.5 mmol) LaCl₃ • 7 H₂O und 183 mg (0.5 mmol) EuCl₃ • 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren 16.6 ml (38 mmol) Trioctylamin und obige Arsenat-Lösung dazugeben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren. Falls erwünscht, kann das Rohprodukt durch Waschen mit kleinen Mengen Ethanol, durch Diafiltration oder andere übliche Verfahren von den Nebenprodukten befreit werden.

### 30. LaAsO₄:Eu Nanopartikel:

3.528 g (9.5 mMol) LaCl₃· 7 H₂O und 183 mg (0.5 mMol) EuCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren eine Lösung von 3.77 g Na₂HAsO₄ · 7 H₂O (12 mmol) in 40 ml Tris[2-(2-methoyethoxy)ethyl]amin (einem Komplexbildner für Na-Ionen) dazugeben. Anschließend unter Stickstoff auf etwa 200 °C heizen und über Nacht bei dieser Temperatur rühren.
Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 31. YPO₄:Ce Nanopartikel:

2.88 g (9.5 mMol) YCl₃, · 6 H₂O und 177 mg (0.5 mMol) CeCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
Unter Rühren eine Lösung von 2.14 g Na₂HPO₄ · 2 H₂O (12 mmol) in 40 ml Tris[2-(2-methoyethoxy)ethyl]amin (einem Komplexbildner für Na-Ionen) dazugeben. Anschließend unter Stickstoff auf etwa 200 °C heizen und über Nacht bei dieser Temperatur rühren.
Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 32. YPO₄: Dy Nanopartikel :

2.88 g (9.5 mMol) YCl₃ 6 H₂O und 188 mg (0.5 mMol) DyCl₃ 6 H₂O in wenig Methanol auflösen und 3.3 ml (12 mmol) Triisobutylphosphat und 40 ml Dihexylether dazugeben. Unter Vakuum das Methanol und freigesetzte Kristallwasser abdestillieren.
2.14 g Na₂HPO₄ · 2 H₂O (12 mmol) in einer Mischung aus 10 ml 15-Crown-5 Kronenether (einem Komplexbildner für Na-Ionen) und 20 ml Dihexylether lösen und unter Rühren zur Metallsalzlösung geben. Anschließend unter Stickstoff auf etwa 200 °C heizen und über Nacht bei dieser Temperatur rühren.
Von der Lösung das Lösungsmittel (vor allem Dihexylether) unter Vakuum abdestillieren. Anschließend wirddie Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 33. In₂S₃ Nanopartikel:

2.93 g (10 mmol) InCl₃ . 4 H₂O in wenig Ethanol lösen. 4.6 g (12 mmol) Trioctylphosphanoxid (TOPO) in 40 ml Dioktylether lösen und dazugeben. Unter Vakuum das Methanol und freigesetzte Kristallwasser abdestillieren.
667mg NaHS · H₂O (9 mmol) werden zusammen mit 5 ml 15-Crown-5 Kronenether (einem Komplexbildner für Na-Ionen) in 20 ml Ethylenglykoldibutylether gelöst und unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 34. BaSO₄:Ce Nanopartikel:

3.165 g (9.5 mMol) BaBr₂ • 2 H₂O und 177 mg (0.5 mmol) CeCl₃ • 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
1.66 g NaHSO₄ · H₂O (12 mmol) werden zusammen mit 5 ml 15-Crown-5 Kronenether (einem Komplexbildner für Na-Ionen) in 20 ml Ethylenglykoldibutylether gelöst und unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 35. BaSO₄:Eu Nanopartikel:

3.165 g (9.5 mMol) BaBr₂ · 2 H₂O und 183 mg (0.5 mMol) EuCl₃ . 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
2.05 g Tetrabutylammoniumhydrogensulfat (CH₂CH₂CH₂CH₂)₄NHSO₄ (12 mmol) werden in 20 ml Dihexylether gelöst und zusammen mit 16.6 ml (38 mmol) Trioctylamin unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Anschließend wird die Lösung durch Diafiltration (Porengröße des Filters: 5000 -10000 Dalton) gegen Ethanol in einer Rührzelle gereinigt und die Nanopartikel durch anschließendes Einengen der diafiltrierten Lösung am Rotationsverdampfer isoliert.

### 36. LaF₃: Ce, Nd Nanopartikel:

1.485 g (4 mmol) LaCl₃ · 7 H₂O, 1.676 g (4.5 mmol) CeCl₃ · 7 H₂O und 538 mg (1.5 mMol) NdCl₃ · 6 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
645 mg Triethylamin-trishydrofluorid(CH₂CH₂)₄N · 3 HF (4 mmol) werden in 20 ml Dihexylether gelöst und zusammen mit 16.6 ml (38 mmol) Trioctylamin unter Rühren zur Metallsalzlösung geben. Anschließend unter Stickstoff auf etwa 200 °C heizen und über Nacht bei dieser Temperatur rühren.
Von der Lösung das Lösungsmittel unter Vakuum abdestillieren. Falls erwünschte kann das zurückbleibende Rohprodukt wie oben angegeben, durch Waschen mit kleinen Mengen Ethanol, durch Diafiltration oder andere übliche Verfahren von den Nebenprodukten befreit werden.

### 37. LaF₃: Ce, Tb Nanopartikel:

1.96 g (4 mMol) La (CH₃COCHCOCH₃)₃ · 3 H₂O, 2.21 g (4.5 mMol) Ce (CH₃COCHCOCH₃)₃ · 3 H₂O und 765 mg (1.5 mMol) Tb (CH₃COCHCOCH₃)₃ · 3 H₂O in wenig Methanol auflösen und 3.3 ml (12 mmol) Tributylphosphat und 40 ml Dihexylether dazugeben. Unter Vakuum das Methanol und freigesetzte Kristallwasser abdestillieren.
0.5 ml Fluorwasserstoff-Pyridin Komplex (C₅H₅N) · x HF mit ca. 70 Gew.-% HF werden in 20 ml Dihexylether gelöst und unter Rühren zur Lösung der Metallacetylacetonate gegeben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 38. YF,: Yb, Er Nanopartikel:

2.10 g (7.9 mmol) Y(CH₃CHOCH₃)₃, 630 mg (1.8 mMol) Yb(CH₃CHOCH₃)₃ und 103 mg (0.3 mMol ) Er(CH₃CHOCH₃)₃ in wenig Methanol auflösen und 3.3 ml (12 mmol) Tributylphosphat und 40 ,ml Dihexylether dazugeben. Unter Vakuum das Methanol und freigesetzte Kristallwasser abdestillieren.
1.1 g Fluorwasserstoff-2,4,6-Trimethylpyridin Komplex (ca. 11-12 mMol HF pro Gramm) werden in 20 ml Dihexylether gelöst und unter Rühren zur Lösung der Metallisopropylate gegeben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 39. LaF₃: Yb, Er Nanopartikel:

2.50 g (7.9 mMol) La(CH₃CHOCH₃)₃, 630 mg (1.8 mMol) Yb(CH₃CHOCH₃)₃ und 103 mg (0.3 mMol) Er(CH₃CHOCH₃)₃ in wenig Methanol auflösen und 3.3 ml (12 mmol) Tributylphosphat und 40 ml Dihexylether dazugeben. Unter Vakuum das Methanol und freigesetzte Kristallwasser abdestillieren.
645 mg Triethylamin-trishydrofluorid (CH₂CH₂)₄N - · 3 HF (4 mmol) werden in 20 ml Dihexylether gelöst und unter Rühren zur Lösung der Metallisopropylate gegeben. Anschließend unter Stickstoff auf etwa 200 °C heizen und über Nacht bei dieser Temperatur rühren.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

### 40. CeF₃: Nd Nanopartikel:

3.11 g (9.8 mMol) Ce(CH₃CHOCH₃)₃ und 64 mg (0.2 mMol) Nd(CH₃CHOCH₃)₃ in wenig Methanol auflösen und 3.3 ml (12 mmol) Tributylphosphat und 40 ml Diisopentylether dazugeben. Unter Vakuum das Methanol und freigesetzte Kristallwasser abdestillieren.
0.5 ml 48%ige Flußsäure (12 mMol HF) werden in 20 ml Diisopentylether dispergiert und unter Rühren zur Lösung der Metallisopropylate gegeben. Anschließend die Lösung über Nacht unter Stickstoff rückflußkochen.
Von der Lösung das Lösungsmittel unter Vakuum abdestillieren. Falls erwünscht, kann das zurückbleibende Rohprodukt wie oben angegeben durch Waschen mit kleinen Mengen Ethanol oder durch Diafiltration von den Nebenprodukten befreit werden.

Ende der expliziten Herstellungsbeispiele.

Wie aus den obigen Beispielen ersichtlich wird, kann das der vorliegenden Erfindung zugrunde liegende Prinzip sehr breit angewendet werden, um eine Fülle von Stoffen mit jeweils gezielt auswählbaren Eigenschaften herzustellen.

Wird TOP und/ oder TOPO als Lösungsmittel während des Herstellungsverfahren verwendet, so ergeben sich gegenüber
den weiter oben erwähnten, prinzipiell sehr gut verwendbaren Phophorsäureestern die Vorteile einer höheren Herstellungstemperatur; etwa um 530 Kelvin und darüber hinaus, einer damit verbundenen besseren Einbindung der Dotierungssubstanz und einer daraus resultierenden hören Intensität des emittierten Lichts, was ein entscheidender Faktor für die Anwendbarkeit eines Fluoreszenzmarkers sein kann. Ausserdem kann bei hohen Synthesetemperaturen auch ein Wirtsgitter erfolgreich dotiert werden, selbst wenn die Atomgröße der Dotanden nur schlecht zur Ionengröße der Wirts ionen paßt. Somit können gezielt fast beliebige Fluoreszenzfarben erzeugt werden.

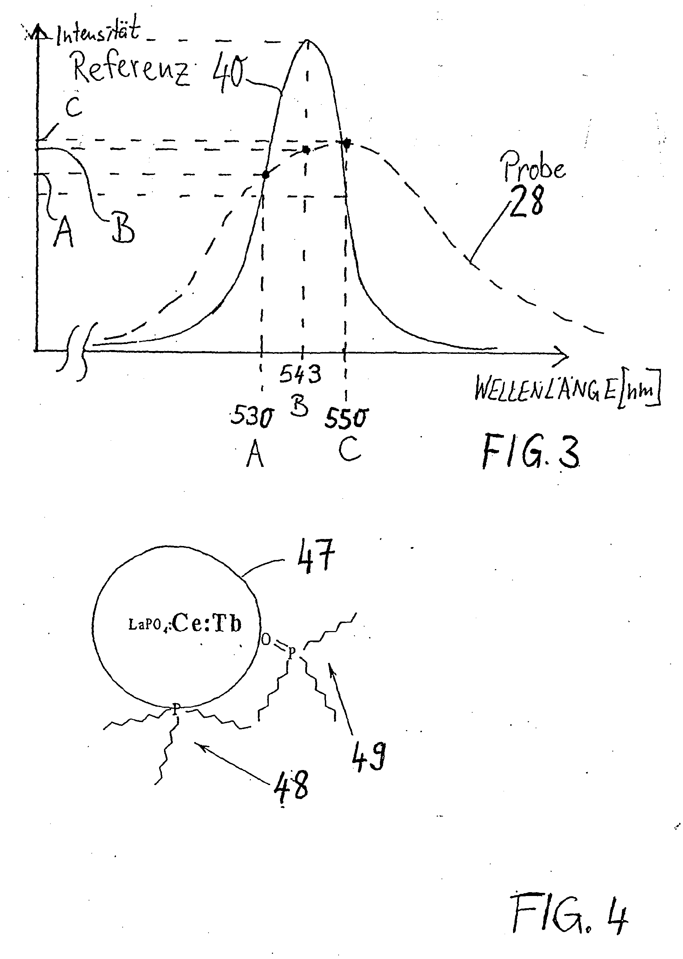

Wie aus Fig. 4 schematisch hervorgeht, ist unmittelbar nach Herstellung die Oberfläche 47 der Nanopartikel von einer Hülle bestehend aus Lösungsmittelresten, insbesondere aus Trioctylphosphin 48, (TOP), und Trioctylphosphinoxid 49, (TOPO) abgekürzt, umgeben, von denen in der Figur nur jeweils eines dargestellt ist. Dies ermöglicht einen vereinfachten Umgang mit den Nanopartikeln im Anschluß an deren Herstellung, da durch diese Oberflächenmoleküle (Lösungsmittelreste) eine verbesserte Löslichkeit in handelsüblichen Lösungsmitteln vermittelt wird, ohne die Teilchen in einem zweiten aufwendigen Schritt chemisch zu verändern.

Die sich aus den oben beschriebenen Schritten des Herstellungsverfahrens ergebende Substanz kann bei Bedarf ebenfalls wie oben beschrieben getrocknet und in einen Feinstaub bis etwa 30 nm durchschnittlicher Korngröße zerbröselt werden.

Im folgenden werden Detektionsverfahren und -vorrichtung anhand der Figuren näher beschrieben.

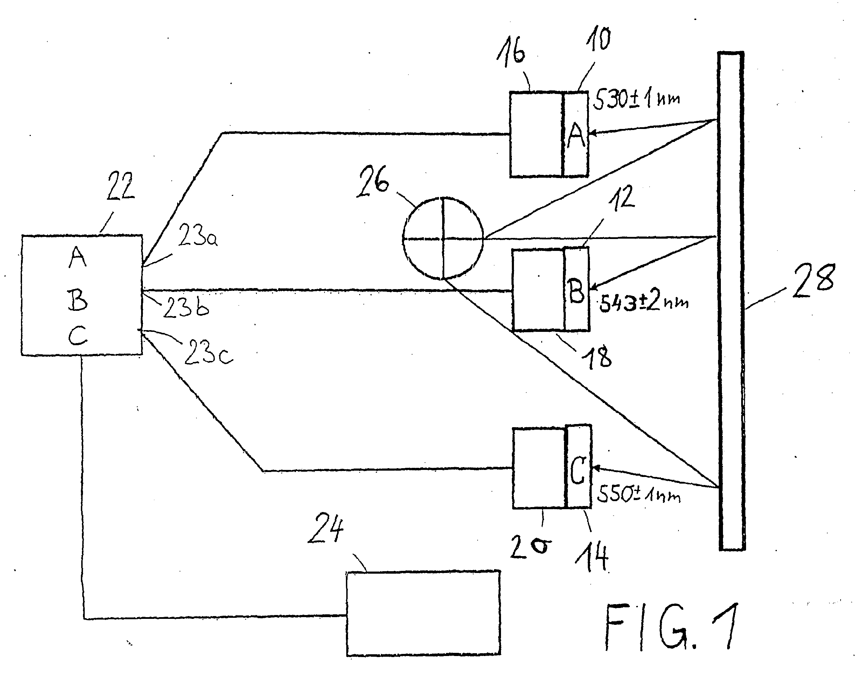

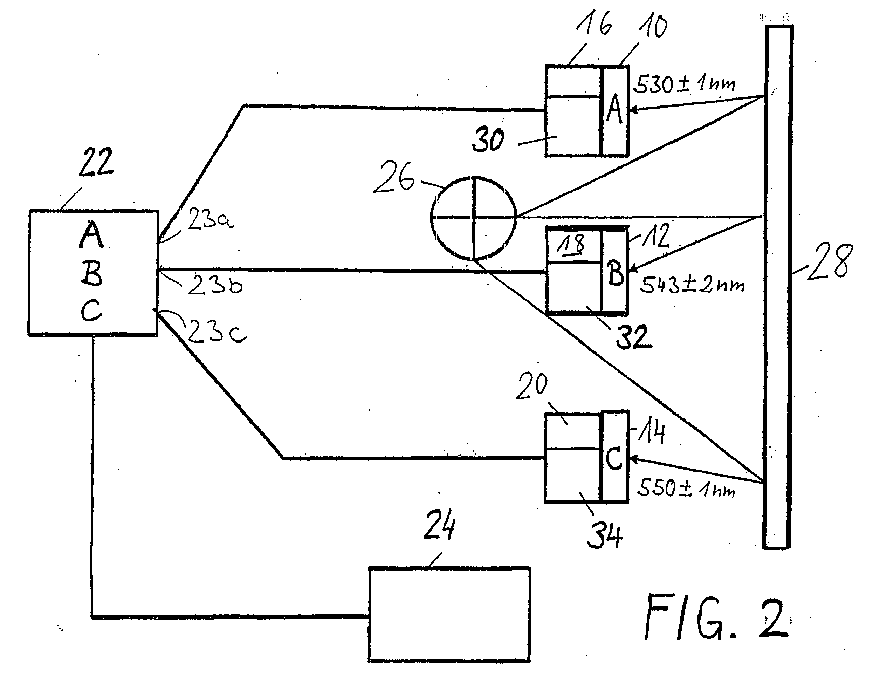

In den weiteren Figuren, insbesondere Fig. 1 und Fig. 2 bezeichnen gleiche Bezugszeichen gleiche oder funktionsgleiche Komponenten.

Mit allgemeinem Bezug zu den Zeichnungen und besonderem Bezug zu Fig. 1 enthält eine erfindungsgemäße Ausführungsform einer Detektorvorrichtung gemäß einer Grundform drei Interferenzfilter 10, 12, 14, drei jeweils an die Interferenzfilter gekoppelte Fotozellen 16, 18, 20, eine Verarbeitungseinheit 22 für aus den Fotozellen kommende Signale sowie eine Anzeigeeinrichtung 24, beispielsweise ein Display. Eine Energiequelle 26 in Form einer W-C-Lichtquelle mit einem schmalbandigen Emissionsspektrum um 255 Nanometer ist derartig angeordnet, daß eine Probesubstanz 28, die dem erfindungsgemäßen Detektionsverfahren unterworfen werden soll, möglichst schattenfrei von der Lichtquelle 26 beleuchtet wird.

Die Probesubstanz 28 soll darauf hin untersucht werden, ob auf ihr eine Markierung vorhanden ist, die als übereinstimmend mit einem vorgegebenen Nanopartikeltyp, der seinerseits einen Fluoreszenzemissionshauptpeak aufweist, erkannt werden kann.

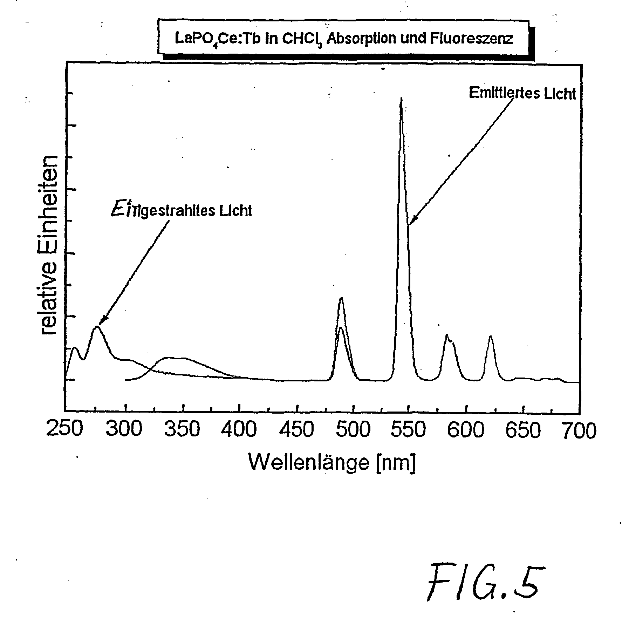

Dieser vorgegebene Nanopartikeltyp sei in diesem Falle LaPO₄Ce:Tb, dessen Absorptions- und Fluoreszenzspektrum in Fig. 5 beispielhaft gezeigt ist. Auf Einzelheiten dieser Darstellung wird weiter unten eingegangen.

Die in Fig. 1 schematisch durch Pfeile dargestellte Strahlung regt zunächst eine auf der Probesubstanz 28 ggf. vorhandene Markierung in Form von möglicherweise dort vorhandenen anorganisch dotierten Nanopartikeln an. Für den Fall, daß die Markierung ein gewisses Fluoreszenzlicht emittiert, was eine Voraussetzung dafür darstellt, daß die Probesubstanz als authentisch anerkannt werden könnte, fangen die Interferenzfilter 10, 12 und 14 gewisse Teile dieser Fluoreszenzemissionsstrahlung durch ihre jeweilige Apertur ein.

Mit Bezug zu Fig. 3, die nur schematisch zu verstehen ist, da die Steilheit des dort abgebildeten Hauptemissionspeaks 40 nicht der Wirklichkeit entspricht, sondern zum Zwecke einer besseren Verständlichkeit wesentlich breiter dargestellt ist, sind die Interferenzfilter 10, 12 und 14 so eingestellt, daß sie drei 'Frequenzpunkte' auf dem dort dargestellten Emissionspeak hindurchlassen. Im vorliegenden Fall der Terbium-Fluoreszewnzemission läßt Filter 12 nur den engen Wellenlängenbereich des Maximums des Hauptpeaks hindurch, also etwa einen Wellenlängenbereich von 543nm +- 2 Nanometer. Der Interferenzfilter 10 ist derart eingestellt, daß er einen ähnlich engen Wellenlängenbereich durchläßt. Im vorliegenden Fall läßt er einen engen Wellenlängenbereich von 530 +/- 10 Nanometern und bevorzugt +/-1 Nanometer durch und deckt damit den kürzerwelligen Nebenspektralbereich des Hauptpeaks ab.

Der Interferenzfilter 14 ist in entsprechender Weise wie Filter 10 und 12 eingestellt, nur daß er den längerwelligen Nebenspektralbereich um 550 Nanometern abdeckt.

Mit Bezug zurück zu Fig. 1 trifft das durch die Interferenzfilter hindurchgehende Licht auf die lichtempfindliche Oberfläche der Fotozellen 16, 18 und 20. Je nach Intensität wird dort ein mehr oder minder großer Strom erzeugt, der um so größer ist, je mehr Licht auf die fotösensitiven Oberflächen fällt.

Die Verarbeitungseinheit 22 ist mit drei Eingangsports 23a, 23b, 23c versehen, die die von den Fotozellen kommenden Ströme aufnehmen. Die Ströme aus den drei Fotozellen werden in der Verarbeitungseinheit 22 zunächst mit einer vorgegebenen Sample-Rate von beispielsweise 10 Kilohertz digitalisiert und in einem dafür vorgesehenen Speicherbereich der Einheit 22 äbgespeichert. Dieser Speicher ist so groß, daß genügend Speicherplatz vorhanden ist, um ein vorgegebenes Zeitfenster der Messwerte von beispielsweise einer Sekunde oder ggf mehr, abzudecken.

Dann werden in einem nächsten Schritt für alle drei Signale aus den Fotozellen 16, 18 und 20 Mittelwerte über das Zeitfenster hinweg gebildet. Es liegen nun drei Werte vor. Diese Werte werden im Folgenden mit A, B und C bezeichnet. Der Wert A entspricht dem Mittelwert zur Fotozelle 16, der Wert B der Fotozelle 18 und der Wert C der Fotozelle 20. Nun wird zunächst der Wert B geprüft, ob er im wesentlich ungleich Null ist, daß heißt, ob die Probesubstanz im engen Bereich der Hauptpeakwellenlänge der Referenzsubstanz von etwa 550 Nanometern liegt, emittiert hat.

Im Falle von vorhandener Lichtemission wird der Wert von B in einem beispielhaft gewählten Bereich zwischen 50 und 500 als auswertbar akzeptiert. Liegt der Bereich unter 50, so wird angenommen, daß die Probesubstanz absolut gesehen, zu wenig Licht im Hauptpeakbereich emittiert, um von dem erfindungsgemäßen Detektionsverfahren mit akzeptabler Toleranz getestet zu werden. Liegt der Wert über 500, so hat er den zulässigen Meßbereich überschritten und kann nicht unmittelbar ausgewertet werden. In einem solchen Fall muß zunächst die Emissionslichtquelle 26 auf eine niedrigere Intensität hin korrigiert werden. Dies kann beispielsweise durch eine automatisierte Rückkopplung zwischen der Einheit 22 und einer Steuerung für die Lichtquelle 26 geschehen. Diese Verbindung ist jedoch aus Gründen einer besseren Übersichtlichkeit nicht eingezeichnet.

Der Wert B für die Probesubstanz 28 liegt nun zwischen 50 und 500. Daraus kann nun geschlossen werden, daß die Probesubstanz zumindest in gewissem Maße in dem engen Wellenlängenbereich des Hauptpeakmaximums liegt nennenswert emittiert. Somit könnte die Probesubstanz 28 eine mit der Referenzsubstanz übereinstimmende Markierung aufweisen. Um dies sicherzustellen oder auszuschließen, werden im folgenden zwei Relationen (Verhältnisse) gebildet: A/B und C/B. Es werden also die Intensitäten der Nebenspektralbereiche aus den Fotozellen 16 und 20 jeweils in Relation zu der Intensität des Hauptpeaks gesetzt.

Erfindungsgemäß wird nun die Probe nur dann als authentisch anerkannt, wenn beide Verhältnisse kleiner sind als ein vorgegebener Schwellwert. Denn nur in einem solchen Fall liegt ein Emissionsspektrum der Probesubstanz vor, das einen ähnlich scharfen Emissionshauptpeak hat wie die Referenzsubstanz. Sobald wenigstens ein Verhältnis der beiden oben genannten größer ist als dieser Schwellwert, wird die Probe als nicht authentisch erkannt und in der Anzeigevorrichtung 24 eine entsprechende Ausgabe erzeugt. Auch bei Übereinstimmung wird eine entsprechende Ausgabe erzeugt.

Die Höhe des Schwellwertes kann in vorteilhafter Weise in grober Näherung bei 50 % liegen, wenn die Nebenspektralbereiche jeweils bei Wellenlängen gemessen wurden, die der Halbwertsbreite des Referenzpeaks entspricht.

Ergibt sich also beispielsweise für B der Wert 300, so wird die Probesubstanz nur dann als authentisch verifiziert, wenn sowohl A als auch C unterhalb eines Wertes von 150 liegen.
Zur Sicherheit kann noch ein gewisser Toleranzbereich in die eine oder andere Richtung definiert werden.

Der Vorteil, nur Relationen von Intensitäten anstatt absoluter Werte auszuwerten liegt darin, daß das Verfahren damit unabhängig von den absoluten Werten der erfassten Strahlungsmenge ist. Dadurch kann weitgehend auf vorgeschaltete Eichverfahren verzichtet werden und der Abstand zwischen Probe und Filtern kann innerhalb bestimmter Grenzen variiert werden, ohne sich verfälschend auf das Ergebnis niederzuschlagen, solange gewährleistet ist, dass die Abstände der drei Filter zur Probensubstanzoberfläche gleich sind.

In Fig. 3 ergäben sich bei Auswerten der gestrichelten Emissionslinie der Probesubstanz 28 für die Relation A/B etwa 90%, und für C/B etwa 105%. Damit wird die Probesubstanz unzweifelhaft als 'nicht-übereinstimmend' ausgewiesen.

In Fig**.** 2 ist eine Darstellung gegeben, die das erfindungsgemäße Detektionsverfahren und die entsprechende Vorrichtung in einer etwas komplexeren Variante erläutern soll.

Es handelt sich im wesentlichen um den gleichen Aufbau, wie er in Fig. 1 dargestellt ist. Der in Fig. 2 dargestellte Aufbau unterscheidet sich jedoch im wesentlichen darin, daß anstelle von Fotozellen nun CCD-Kameras 30, 32 und 34 anstelle oder gleichzeitig mit den Fotozellen an die Interferenzfilter 10, 12 und 14 gekoppelt sind. Im Falle von gleichzeitiger Kopplung können die im folgenden beschriebenen Verfahrensschritte zusätzlich zu den oben beschriebenen durchgeführt werden, um eine zusätzliche Markierungsüberprüfung zu gewährleisten. In diesem Falle werden nach erfolgreich durchlaufener erster Prüfung (siehe oben) die von den CCD-Kameras aufgenommenen Bilder mit Mustererkennungsalgorithmen, wie sie im Stand der Technik bekannt sind, mit einem vorgegebenen Referenzmuster, das als Bitmap in einem dafür vorgesehenen Speicherbereich der Weiterverarbeitungseinheit 22 vorgesehen ist, verglichen. Nur wenn sich eine weitgehende Übereinstimmung der Muster ergibt, die von Fall zu Fall definierbar ist, wird die Probesubstanz als authentisch anerkannt und eine entsprechende Anzeige am Display 24 ausgegeben.

Im anderen Fall, wenn außer den CCD-Kameras keinerlei fotosensitives Element das Licht der Interferenzfilter aufnimmt, wird die Leuchtdichte der von den CCD-Kameras aufgenommenen Bilder im Sinne der oben beschriebenen Quantifizierung der Signale mit anschließender Quotientenbildung ausgewertet. Es versteht sich von selbst, daß dieses Verfahren für einzelne Flächenbereiche der CCD-Kamerabilder separat durchgeführt werden kann und daraus ein entsprechender Mittelwert beziehungsweise ein entsprechendes Endergebnis gewonnen werden kann.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Insbesondere können erfindungsgemäße, UV- Licht absorbierende Stoffe zur Abschirmung vor oder Beseitigung von UV-Licht oder als Wandler in sichtbares Licht verwendet werden. Sie können dadurch beispielsweise als Beimengung in Sonnenschutzcremes verwendet werden, oder als Beschichtungsstoff den Wirkungsgrad von Solaranlagen, insbesondere Photovoltaikanlagen erhöhen und die Anlagen vor UV-Licht verursachter vorzeitiger Alterung bewahren.

Ein neuer, vielfältiger Anwendungsbereich für die erfindungsgemäßen Stoffgruppen ergibt sich auch durch die Verwendung von Nanopartikeln enthaltend einen Stoff oder mehrere aus der Familie der Phosphore, insbesondere von Wolframaten, Tantalaten, Gallaten, Aluminaten, Boraten, Vanadaten, Sulfoxiden, Silikaten, Halogenidverbindungen zur Lichterzeugung in Geräten oder Leuchtkörpern beliebiger Art, sowie Lampen. Dadurch können standardmäßig LEDs, beliebige Displayvorrichtungen, Bildschirme jeglicher Art vorteilhaft bestückt werden. Der Einsatz dieser 'Phosphoren-Nanopartikel' bietet sich jedoch im Besonderen dann an, wenn die besondere Eigenschaften der Nanopartikel irgendeinen besonderen, für den jeweiligen Anwendungsfall typischen Vorteil bietet. Nur beispielhaft genannt seien grosse, leuchtende, möglicherweise dreidimensional ausgestaltete Flächen oder Leuchtkörper, die dann nur durch Beimischung der Nanopartikel in dünne Folien wirtschaftlich herstellbar sind. In gleicher Weise können dotierte Nanopartikel im allgemeinen Sinne und die speziell nach der vorliegenden Erfindung weitergebildeten, anorganisch dotierten Nanopartikel zur Lichterzeugung verwendet werden.

## Patentansprüche

1. Verfahren zur Synthese von Metallsalz-Nanopartikeln, mit einem Kristallgitter oder Wirtsgitter, dessen Kation aus einer Kationquelle gewinnbar ist, und dessen Anion aus einer als Anionquelle dienenden Stoffklasse gewinnbar ist, wobei das Wirtsmaterial insbesondere Verbindungen aus der Gruppe der Phosphate, Halophosphate, Arsenate, Sulfate, Borate, Aluminate, Gallate, Silikate, Germanate, Oxide, Vanadate, Niobate, Tantalate, Wolframate, Molybdate, Alkalihalogenate, andere Halogenide, Nitride, Sulfide, Selenide, Sulfoselenide, sowie Oxysulfide enthalten kann,
**gekennzeichnet durch** die Schritte:
a) Herstellen einer Synthesemischung, zumindest aus
aa) einem organischen Lösungsmittel, das wenigstens eine das Kristallwachstum der Nanopartikel steuernde Komponente, aufweist, insbesondere eine phosphororganische Verbindung enthaltende Komponente oder ein Monoalkylamin, insbesondere Dodecylamin, oder ein Dialkylamin, insbesondere Bis-(ethylhexyl)-amin,
bb) einem als Kationquelle dienenden, in der Synthesemischung löslichen oder zumindest darin dispergierbaren Kationäusgangsstoff, insbesondere einer Metallsalzausgangsverbindung, bevorzugt Metallchlorid oder einem Alkoxid oder einem Metall-Acetat, und
cc) einem als Anionquelle dienenden, in der Synthesemischung löslichen oder zumindest darin dispergierbaren Anionausgangsstoff aus der Stoffklasse, wobei die Stoffklasse enthält:
aaa) freie Säuren der Salze der jeweils herzustellenden Metallsalz-Nanopartikel, oder
bbb) in der Synthesemischung lösliche oder zumindest darin dispergierbare Salze, insbesondere Salze mit organischem Kation, oder Metallsalze, bei letzteren vorzugsweise Alkalimetallsalze, oder
ccc) organische Verbindungen, die ab einer erhöhten Synthesemindesttemperatur das Anion freisetzen, wobei je nach Wahl des Salzes der herzustellenden Nanopartikel ein geeigneter, anionspendender Stoff aus der Stoffklasse gewählt wird, und
b) Halten der Mischung über einer vorgegebenen Synthesemindesttemperatur während einer zu der Temperatur passenden Synthesezeitspanne.

2. Verfahren nach Anspruch 1, wobei
a) zur Herstellung von Nanopartikeln mit Phosphor enthaltenden Anionen Phosphorsäure als Anionquelle verwendet wird, wobei
zur Herstellung von Nanopartikeln mit Bor enthaltenden Anionen Borsäure als Anionquelle verwendet wird, wobei zur Herstellung von Nanopartikeln mit Fluor enthaltenden Anionen Flusssäure als Anionquelle verwendet wird, wobei
b) im Falle der Verwendung eines in der Synthesemischung schwer löslichen Salzes aus der Anionenstoffklasse ein Komplexbildner für die Metallkomponente des Metallsalzes zur leichteren Löslichkeit dessen zur Synthesemischung zugegeben wird, bevorzugt ein Kronenether für Alkalimetallsalze.

3. Verfahren nach dem vorstehenden Anspruch, bei dem als phosphororganische Verbindung für die Wachstumssteuerkomponente wenigstens eines von
a) Phosphinsäureester ( (R₁-) (R₂-) (R₃-O-)P=O ),
b) Phosphonsäurediester, ( (R₁-) (R₂-O-) (R₃-O-)P=O ),
c) Phosphorsäuretriester, (Trialkylphosphate) ( (R₁-O-)(R₂₋O-) (R₃-O-) P=O ),
d) Trialkylphosphane, ( (R₁-) (R₃-) (R₃-)P ) , insbesondere Trioctylphosphan (TOP),
e) Trialkylphosphanoxide, ( (R₁-)(R₂-)(R₃-)P=O ), insbesondere Trioctylphosphanoxid (TOPO),
wobei R1, R2, R3 verzweigte oder unverzweigte Alkanketten mit mindestens einem Kohlenstoffatom, oder Phenyl-, Toloyl-, Xylolyl-, oder Benzylgruppen sind, oder
f) ein Phosphoramid, bevorzugt Tris-(dimethylamino)-phosphan, oder
g) ein Phosphoramidoxid, bevorzugt Tris-(dimethylamino)-phosphanoxid,
im Lösungsmittel enthalten ist.

4. Verfahren nach dem vorstehenden Anspruch, bei dem ein Trialkylphosphat oder ein Trialkylphosphan als Steuerkomponente bei der Bildung der Nanopartikel verwendet wird, wobei pro Mol Metallionen weniger als 10 Mol, bevorzugt 0,9 bis 5 Mol, und besonders bevorzugt 0,95 bis 2 Mol an Steuerkomponente verwendet wird.

5. Verfahren nach einem der vorstehenden Ansprüche, wobei wenigstens eine weitere, vorzugsweise metallkomplexierende Komponente, zur Synthesemischung zugefügt wird, vorzugsweise, um in Metallsalzausgangsverbindungen vorhandenes Kristallwasser zu verdrängen, insbesondere eine
a) Etherverbindung, bevorzugt Dipentylether, Dihexylether, Diheptylether, Dioctylether, Dibenzylether, Diisoamylether, Ethylenglykoldibutylether, Diethylenglykoldibutylether, oder Diphenylether, oder / und
b) einer über der Synthesemindesttemperatur siedenden Alkanverbindung, bevorzugt Dodekan oder Hexadekan, oder / und
c) einer Aminverbindung, bevorzugt Dihexylamin, Bis-(2-ethylhexyl)amin, Trioctylamin, Tris-(2-ethylhexyl)amin.

6. Verfahren nach Anspruch 3, wobei R1, R2, oder R3 verzweigte oder unverzweigte Alkanketten sind, die wenigstens eine Carboxylgruppe (-COOH), Carbonsäureestergruppe (-COOR), Aminogruppen (-NH₂) und (-NHR), Hydroxylgruppe (-OH), Cyanogruppe (-CN), Mercaptogruppe (-SH), Brom (-Br) und Chlor (-Cl) oder Kombinationen aus diesen Gruppen tragen.

7. Verfahren nach Anspruch 3, bei dem Mischungen der phosphororganischen Verbindungen verwendet werden.

8. Verfahren nach einem der vorstehenden Ansprüche, bei dem als Kationquelle wenigstens eines von Chloriden, Bromiden, Iodiden, Alkoxiden, Metall-Acetaten, oder Acetylacetonat als Ausgangsstoff verwendet wird.

9. Verfahren nach einem der vorstehenden Ansprüche, weiter enthaltend die Schritte,
a) Herstellen einer ersten Lösung des Kationausgangsstoffes in einem - vorzugsweise niederen - Alkohol, insbesondere Methanol, wobei vorzugsweise ein Metallsalz verwendet wird, das nichtoxidierend und in der Synthesemischung löslich ist, und
b) Mischen der ersten Lösung mit dem Lösungsmittel gemäss Anspruch 1 oder 2 zur Herstellung der metallkomplexierenden Synthesemischung,
c) Erhitzthalten der Synthesemischung unter Inertgas, insbesondere unter Stickstoff.

10. Verfahren nach dem vorstehende Anspruch, weiter den Schritt enthaltend, den vorzugsweise niederen Alkohol aus der Synthesemischung während der Synthese abzudestillieren.

11. Verfahren nach einem der vorstehenden Ansprüche, den weiteren Schritt enthaltend:
Abdestillieren einer oder mehrerer Lösungsmittelkomponenten der Synthesemischung, bevorzugt unter Vakuum, bevorzugt nach Ende der Synthesezeitspanne.

12. Verfahren nach einem der vorstehenden Ansprüche, den weiteren Schritt enthaltend:
Reinigen der Nanopartikel von anhaftenden Nebenprodukten durch Abwaschen mit einem Alkohol, bevorzugt Ethanol, oder durch Diafiltration.

13. Verfahren nach einem der vorstehenden Ansprüche, den weiteren Schritt enthaltend:
Neutralisieren der Synthesemischung mit einer in der Synthesemischung löslichen Base, bevorzugt Trihexylamin, Triheptylamin, Trioctylamin, Tris-(2-ethylhexyl)amin.

14. Verfahren nach einem der vorstehenden Ansprüche, wobei als Ausgangsstoff ein hydratisiertes Metallsalz verwendet wird.

15. Verfahren nach einem der vorstehenden Ansprüche, angewendet zur Synthese fluoreszenzfähiger Nanopartikel.

16. Verfahren nach einem der vorstehenden Ansprüche, wobei mehrere verschiedene Kationenquellen, insbesondere Metallsalzausgangsverbindungen verwendet werden, wobei wenigstens ein Metall davon als Dotierungsmaterial für die herzustellenden Nanopartikel verwendet wird.

17. Verfahren nach Anspruch 1, wobei das Kristallgitter oder im Falle einer Dotierung das Wirtsgitter Verbindungen des Typs XY enthält, wobei X ein Kation aus einem oder mehreren Elementen der Hauptgruppen 1a,2a, 3a, 4a, der Nebengruppen 2b, 3b, 4b, 5b, 6b, 7b oder der Lanthaniden des Periodensystems ist, und Y entweder ein mehratomiges Anion aus einem oder mehreren Elementen der Hauptgruppen 3a, 4a, 5a, der Nebengruppen 3b, 4b, 5b, 6b, 7b, und oder 8b sowie Elementen der Hauptgruppen 6a, und oder 7, oder ein einatomiges Anion aus der Hauptgruppe 5a, 6a oder 7a des Periodensystems ist.

18. Verfahren nach einem der vorstehenden Ansprüche, wobei zur Herstellung von LaPO₄ Nanopartikeln als Wachstumssteuerkomponente des Lösungsmittels ein Phosphorsäureester, insbesondere ein Trialkylphoshat, und bevorzugt Tributhylphosphat verwendet wird.

19. Verfahren nach einem der vorstehenden Ansprüche, wobei als Dotierung ein oder mehrere Elemente: aus einer Menge enthaltend Elemente der Hauptgruppen 1a, 2a oder Al, Cr, Tl, Mn, Ag, Cu, As, Nb, Ni, Ti, In, Sb, Ga, Si, Pb, Bi, Zn, Co und oder Elemente der Lanthaniden verwendet werden.

20. Verfahren nach einem der vorstehenden Ansprüche, wobei als Dotierung zwei Elemente in unterschiedlichen relativen Konzentrationen zueinander verwendet werden, wobei das eine Dotierelement ein lokales Maximum des Absorptionsspektrums für Licht, bevorzugt UV-Licht besitzt, und das andere Dotierelement ein Fluoreszenzemissionsspektrum hat, das mindestens ein lokales Maximum aufweist, das einen Abstand Δλ/ λ vom Absorptionsmaximum des ersten Dotierelements von wenigstens 4%, bevorzugt von mehr als 20% aufweist.

21. Verfahren nach dem vorstehenden Anspruch, wobei als Dotierung Cer und Terbium, und als Wirtsmaterial LaPO₄ verwendet werden.

22. Verfahren nach einem der vorstehenden Ansprüche 1 bis 19, wobei Nanopartikel mit einer der folgenden Verbindung synthetisiert werden:
LiI:Eu; NaI:Tl; CsI:Tl; CsI:Na; Li.F:Mg; LiF:Mg,Ti; LiF:Mg,Na; KMgF₃:Mn; Al₂O₃:Eu; BaFCl : Eu; BaFCl : Sm; BaFBr : Eu; BaFCl_{0,5}Br_{0,5} : Sm; BaY₂F₈:A(A= Pr, Tm, Er, Ce); BaSi₂O₅:Pb; BaMg₂Al₁₆O₂₇: Eu; BaMgAl₁₄O₂₃: Eu ;BaMgAl₁₀O₁₇: Eu; (Ba, Mg)Al₂O₄:Eu; Ba₂P₂O₇:Ti; (Ba, Zn, Mg)₃Si₂O₇:Pb; Ce(Mg, Ba) Al₁₁O₁₉; Ce_{0,65}Tb_{0,35}MgAl₁₁O₁₉; MgAl₁₁O₁₉:Ce,Tb; MgF₂:Mn; MgS : Eu; MgS:Ce; MgS:Sm; MgS(Sm, Ce); (Mg, Ca)S:Eu; MgSiO₃:Mn; 3,5MgO.0,5MgF₂.GeO₂:Mn; MgWO₄: Sm; MgWO₄:Pb; 6MgO.As₂O₅:Mn; (Zn, M_{g})F₂:Mn; (Zn, Be)SO₄:Mn; Zn₂SiO₄:Mn; Zn₂SiO₄:Mn,As; ZnO:Zn; ZnO:Zn,Si,Ga; Zn₃(PO₄)₂:Mn; ZnS:A (A=Ag, Al, Cu); (Zn, Cd)S:A : (A=Cu, Al, Ag, Ni); CdBO₄:Mn; CaF₂:Mn; CaF₂:Dy; CaS:A (A=Lanthanide, Bi); (Ca, Sr)S:Bi; CaWO₄:Pb; CaWO₄:Sm; CaSO₄:A (A= Mn, Lanthanide); 3Ca₃(PO₄)₂.Ca(F, Cl)₂:Sb, Mn; CaSiO₃:Mn, Pb; Ca₂Al₂Si₂O₇:Ce; (Ca, Mg)SiO₃:Ce; (Ca, Mg)SiO₃:Ti; 2SrO.6(B₂O₃)·SrF₂:Eu; 3Sr₃(PO₄)₂.CaCl₂:Eu; A₃(PO₄)₂.ACl₂:Eu (A=Sr, Ca, Ba); (Sr,Mg)₂P₂O₇:Eu; (Sr, Mg)₃(PO₄)₂:Sn; SrS:Ce; SrS:Sm,Ce; SrS:Sm; SrS:Eu; SrS:Eu,Sm; SrS:Cu,Ag; Sr₂P₂O₇: Sn; Sr₂P₂O₇:Eu; Sr₄Al₁₄O₂₅:Eu; SrGa₂S₄:A (A=Lanthanide, Pb); SrGa₂S₄:Pb; Sr₃Gd₂Si₆O₁₈:Pb, Mn; YF₃:Yb,Er; YF₃:Ln (Ln=Lanthanide); YLiF₄:Ln (Ln=Lanthanide); Y₃Al₅O₁₂:Ln (Ln=Lanthanide); YAl₃(BO₄)₃:Nd, Yb; (Y, Ga)BO₃ : Eu; (Y, Gd)BO₃:Eu; Y₂Al₃Ga₂O₁₂:Tb; Y₂SiO₅:Ln (Ln=Lanthanide); Y₂O₃:Ln (Ln=Lanthanide); Y₂O₂S:Ln (Ln=Lanthanide); YVO₄:A (A=Lanthanide, In); Y(P, V)O₄:Eu; YTaO₄:Nb; YAlO₃:A (A= Pr, Tm, Er, Ce); YOCl:Yb,Er; LnPO₄ : Ce, Tb (Ln=Lanthanide oder Mischungen von Lanthaniden); LuVO₄:Eu; GdVO₄ : Eu; Gd₂O₂S: Tb; GdMgB₅O₁₀:Ce,Tb; LaOBrTb; La₂O₂S: Tb; LaF₃:Nd,Ce; BaYb₂F₆:Eu; NaYF₄:Yb,Er; NaGdF₄:Yb,Er; NaLaF₄:Yb,Er; LaF₃:Yb,Er,Tm; BaYF₅:Yb,Er; Ga₂O₃:Dy; GaN:A (A= Pr, Eu, Er, Tm) ; Bi₄Ge₃O₁₂; LiNbO₃:Nd,Yb; LiNbO₃:Er; LiCaAlF₆:Ce; LiSrAlF₆:Ce; LiLuF₄:A (A= Pr, Tm, Er, Ce); GD₃Ga₅O₁₂:Tb; GD₃Ga₅O₁₂:Eu; Li₂B₄O₇:Mn,SiOₓ: Er ,Al (0<x<2).

23. Verfahren nach einem der vorstehenden Ansprüche 1 bis 19, wobei Nanopartikel mit einer der folgenden Verbindung synthetisiert werden:
YVO₄ :Eu; YVO₄:Sm; YVO₄:Dy; LaPO₄:Eu; LaPO₄:Ce; LaPO₄:Ce,Tb; ZnS:Tb; ZnS:TbF₃; ZnS:Eu; ZnS:EuF₃; Y₂O₃:Eu; Y₂O₂S:Eu; Y₂SiO₅:Eu; SiO₂:Dy; SiO₂:Al; Y₂O₃:Tb; CdS:Mn; ZnS:Tb; ZnS:Ag; ZnS:Cu; Ca₃(PO₄)₂:Eu²⁺; Ca₃(PO₄)₂:Eu²⁺, Mn²⁺ ; Sr₂SiO₄:Eu²⁺; oder BaAl₂O₄:Eu²⁺.

24. Verfahren nach einem der vorstehenden Ansprüche 1 bis 19, wobei Nanopartikel mit einer der folgenden Verbindung synthetisiert werden: MgF₂:Mn; ZnS:Mn; ZnS:Ag; ZnS:Cu; CaSiO₃:A; CaS:A; CaO:A; ZnS:A; Y₂O₃:A oder MgF₂:A (A = Lanthaniden).

25. Verfahren nach einem der vorstehenden Ansprüche, insbesondere nach Anspruch 21, wobei eine Dotierung mit Terbium im Bereich 0,5 bis 30 Molprozent, bevorzugt 5 bis 25 Molprozent und besonders bevorzugt 13 bis 17 Molprozent erfolgt,
wobei zwischen Lanthan und Cer entsprechend ein Molverhältnis im Verhältnis von 0.13 bis 7.5, bevorzugt von 0.25 bis 4, und besonders bevorzugt zwischen 0.9 bis 1.1 vorliegt, und Metallchloridsalze als Metallquelle dienen.

26. Verfahren nach Anspruch 1, zur Synthese von Halbleiter (HL) -Nanopartikeln, insbesondere von III-V- oder von II-VI-Halbleiter.

27. Nanopartikel, hergestellt nach dem Verfahren gemäß einem der vorstehenden Ansprüche.

28. Stoff, enthaltend Nanopartikel nach dem vorstehenden Anspruch.

29. Stoff, enthaltend Nanopartikel, enthaltend ein Kristallgitter oder im Falle einer Dotierung ein Wirtsgitter, wobei
das Wirtsgitter Verbindungen des Typs XY enthält, wobei X ein Kation aus einem oder mehreren Elementen der Hauptgruppen 1a, 2a, 3a, 4a, der Nebengruppen 2b, 3b, 4b, 5b, 6b, 7b oder der Lanthaniden des Periodensystems ist, und Y entweder ein mehratomiges Anion aus einem oder mehreren Elementen der Hauptgruppen 3a, 4a, 5a, der Nebengruppen 3b, 4b, 5b, 6b, 7b, und oder 8b sowie Elementen der Hauptgruppen 6a, und oder 7, oder ein einatomiges Anion aus der Hauptgruppe 5a, 6a oder 7a des Periodensystems ist, und wobei
als Dotierung ein oder mehrere Elemente aus der Gruppe enthaltend Elemente der Hauptgruppen 1a, 2a oder Al, Cr, Tl, Mn, Ag, Cu, As, Nb, Ni, Ti, In, Sb, Ga, Si, Pb, Bi, Zn, Co und oder Elemente der Lanthaniden enthalten sind.

30. Stoff nach dem vorstehenden Anspruch, wobei das Gitter insbesondere Verbindungen aus einer der folgenden Gruppen:
Phosphate, Halophosphate, Arsenate, Sulfate, Borate, Aluminate, Gallate, Silikate, Germanate, Oxide, Vanadate, Niobate, Tantalate, Wolframate, Molybdate, Alkalihalogenate, andere Halogenide, Nitride, Sulfide, Selenide, Sulfoselenide, oder der Oxysulfide enthält.

31. Stoff nach einem der beiden vorstehenden Ansprüche, wobei als Dotierung zwei Elemente in vorbestimmten relativen Konzentrationen zueinander enthalten sind, wobei das eine Dotierelement ein lokales Maximum des Absorptionsspektrums für Licht, insbesondere W-Licht besitzt, und das andere Dotierelement ein Fluoreszenzemissionsspektrum hat, das mindestens ein lokales Maximum aufweist, das einen Abstand Δλ/ λ vom Absorptionsmaximum des ersten Dotierelements von wenigstens 4% aufweist.

32. Stoff nach Anspruch 29, wobei eines oder mehrere von LiI:Eu; NaI:Tl; CsI:Tl; CsI:Na; LiF:Mg; LiF:Mg,Ti; LiF:Mg,Na; KMgF₃:Mn; Al₂O₃:Eu; BaFCl:Eu; BaFCl:Sm; BaFBr:Eu; BaFCl_{0,5}Br_{0,5}:Sm; BaY₂F₈:A(A= Pr, Tm, Er, Ce); BaSi₂O₅:Pb; BaMg₂Al₁₆O₂₇:Eu; BaMgAl₁₄O₂₃:Eu; BaMgAl₁₀O₁₇:Eu; (Ba, Mg)Al₂O₄:Eu; Ba₂P₂O₇:Ti; (Ba, Zn, Mg)₃Si₂O₇:Pb; Ce(Mg, Ba) Al₁₁O₁₉; Ce_{0,65}Tb_{0,35}MgAl₁₁O₁₉; MgAl₁₁O₁₉:Ce,Tb; MgF₂:Mn; MgS : Eu; MgS:Ce; MgS:Sm; MgS(Sm, Ce); (Mg, Ca)S:Eu; MgSiO₃:Mn; 3,5MgO.0,5MgF₂.GeO₂:Mn; MgWO₄:Sm; MgWO₄:Pb; 6MgO.As₂O₅:Mn; (Zn, Mg)F₂:Mn; (Zn, Be)SO₄:Mn; Zn₂SiO₄:Mn; Zn₂SiO₄ :Mn,As; ZnO:Zn; ZnO:Zn,Si,Ga; Zn₃(PO₄)₂:Mn; ZnS:A (A=Ag, Al, Cu); (Zn, Cd)S:A (A=Cu, Al, Ag, Ni); CdBO₄:Mn; CaF₂:Mn; CaF₂:Dy; CaS:A (A=Lanthanide, Bi); (Ca, Sr)S:Bi; CaWO₄:Pb; CaWO₄:Sm; CaSO₄:A (A= Mn, Lanthanide); 3Ca₃(PO₄)₂.Ca(F, Cl)₂:Sb, Mn; CaSiO₃ : Mn, Pb; Ca₂Al₂SiO₇:Ce; (Ca, Mg)SiO₃:Ce; (Ca, Mg)SiO₃:Ti; 2SrO.6(B₂O₃).SrF₂:Eu; 3Sr₃(PO₄)₂.CaCl₂:EU; A₃(PO₄)₂.ACl₂:Eu (A=Sr, Ca, Ba); (Sr,Mg)₂P₂O₇:Eu; (Sr, Mg)₃(PO₄)₂:Sn; SrS:Ce; SrS:Sm,Ce; SrS : Sm; SrS:Eu; SrS : Eu, Sm; SrS : Cu, Ag; Sr₂P₂O₇:Sn; Sr₂P₂O₇:Eu; Sr₄Al₁₄O₂₅:Eu; SrGa₂S₄:A (A=Lanthanide, Pb) ; SrGa₂S₄:Pb; Sr₃Gd₂Si₆O₁₈:Pb,Mn; YF₃:Yb,Er; YF₃ : Ln (Ln=Lanthanide) ; YLiF₄: Ln (Ln=Lanthanide) ; Y₃Al₅O₁₂:Ln (Ln=Lanthanide) ; YAl₃(BO₄)₃:Nd,Yb; (Y,Ga)BO₃:Eu; (Y,Gd)BO₃:Eu; Y₂Al₃ Ga₂O₁₂ :Tb; Y₂SiO₅:Ln (Ln=Lanthanide) ; Y₂O₃ : Ln (Ln=Lanthanide) ; Y₂O₂S: Ln (Ln=Lanthanide); YVO₄ : A (A=Lanthanide, In); Y(P,V)O₄:Eu; YTaO₄:Nb; YAlO₃:A (A= Pr, Tm, Er, Ce); YOCl:Yb,Er; LnPO₄:Ce,Tb (Ln=Lanthanide oder Mischungen von Lanthaniden); LuVO₄:Eu; GdVO₄ : Eu; Gd₂O₂S : Tb; GdMgB₅O₁₀: Ce, Tb; LaOBrTb; La₂O₂S : Tb; LaF₃: Nd, Ce; BaYb₂F₈: Eu; NaYF₄: Yb, Er; NaGdF₄: Yb, Er.; NaLaF₄: Yb, Er; LaF₃:Yb,Er,Tm; BaYF₅:Yb,Er ; Ga₂O₃: Dy; GaN:A (A= Pr, Eu, Er, Tm); Bi₄Ge₃O₁₂; LiNbO₃:Nd,Yb; LiNbO₃:Er; LiCaAlF₆:Ce; LiSrAlF₆:Ce; LiLuF₄ :A (A=Pr, Tm, Er, Ce); GD₃Ga₅O₁₂:Tb; GD₃Ga₅O₁₂:Eu; Li₂B₄O₇:Mn,SiOₓ:Er,Al (0<x<2)
als Material für die dotierten Nanopartikel enthalten ist.

33. Stoff nach Anspruch 29, wobei eines oder mehrere von YVO₄:Eu; YVO₄:Sm; YVO₄:Dy; LaPO₄:Eu; LaPO₄:Ce; LaPO₄:Ce,Tb; ZnS:Tb; ZnS:TbF₃; ZnS:Eu; ZnS:EuF₃; Y₂O₃:Eu; Y₂O₂S:Eu; Y₂SiO₅:Eu; SiO₂:Dy; SiO₂:Al; Y₂O₃:Tb; CdS:Mn; ZnS:Tb; ZnS:Ag; ZnS:Cu; Ca₃(PO₄)₂:Eu²⁺; Ca₃(PO₄)₂:Eu²⁺, Mn²⁺; Sr₂SiO₄:Eu²⁺; oder BaAl₂O₄ : Eu²⁺ als Material für die dotierten Nanopartikel enthalten ist.

34. Stoff nach Anspruch 29, wobei eines oder mehrere von MgF₂:Mn; ZnS:Mn; ZnS:Ag; ZnS:Cu; CaSiO₃:A; CaS:A; CaO:A; ZnS : A; Y₂O₃:A oder MgF₂:A (A = Lanthaniden) als Material für die dotierten Nanopartikel enthalten ist.

35. Stoff nach Anspruch 29, wobei das Wirtsgitter eine Lanthan- oder Lanthanidenverbindung, insbesondere LaPO₄, enthält, und wobei Dotanden aus der Gruppe der Lanthaniden enthalten sind.

36. Stoff nach dem vorstehenden Anspruch, enthaltend zwei Dotanden, insbesondere Cer und Terbium, wobei der eine als Energieabsorber, insbesondere als UV-Lichtabsorber und der andere als Fluoreszenzlichtemitter wirkt.

37. Stoff nach einem der vorstehenden Ansprüche 29 bis 36, bevorzugt enthaltend Nanopartikel aus der Stoffgruppe der Phosphate der Seltenerdmetalle, oder Phosphate der III. Hauptgruppe, oder Phosphate von Calcium (Ca), Strontium (Sr), oder Barium (Ba),
wobei die Nanopartikel eine Ausdehnung aufweisen von maximal 15 nm, bevorzugt maximal 10 nm, längs ihrer längsten Achse, und am meisten bevorzugt 4 bis 5 nm mit einer Standardabweichung geringer als 30 %, bevorzugt jeweils geringer als 10%.

38. Nanopartikelträgerstoff, insbesondere eine Trägerfolie, eine Trägerflüssigkeit, davon insbesondere ein Trägerlack oder eine Trägerfarbe, oder ein Aerosol enthaltend dotierte Nanopartikel nach Anspruch 27 oder einen Stoff gemäß einem der Ansprüche 28 bis 37.

39. Nanopartikelträgerstoff nach dem vorstehenden Anspruch, wobei die Nanopartikel in einem Polymer, bevorzugt einer Polymerfolie, insbesondere aus Polyethylen oder Polypropylen eingebettet sind.

40. Polymerfolie, enthaltend dotierte Nanopartikel nach Anspruch 27 oder einen Stoff nach Anspruch 28 bis 37.

41. Markierungsgegenstand, in dem die nach dem Verfahren gemäß einem der vorstehenden Ansprüche 1 bis 26 hergestellten Nanopartikel oder ein Stoff nach einem der Ansprüche 27 bis 37 derart inkorporiert sind /ist, dass die Partikel oder der Stoff durch vorbestimmbare Energiezufuhr, bevorzugt durch eine elektromagnetische Bestrahlung, insbesondere Strahlung mit einer Wellenlänge kleiner als 300 nm, oder durch Bestrahlung mit Teilchen oder Elektronen, anregbar sind /ist, und eine extern vom Gegenstand nachweisbare Fluoreszenzemission, bevorzugt im sichtbaren Bereich des Lichts im UV-Bereich, oder im nahen Infrarotbereich (NIR), bewirkt.

42. Gegenstand nach dem vorstehenden Anspruch, versehen mit einem Nanopartikelträgerstoff nach einem der Ansprüche 38 oder 39 oder einer Polymerfolie gemäß Anspruch 40.

43. Gegenstand nach dem vorstehenden Anspruch, enthaltend eine Beschichtung mit einem Nanopartikelträgerstoff.

44. Verwendung von Nanopartikeln enthaltend einen Stoff oder mehrere aus der Familie der Phosphore, insbesondere Verwendung von Wolframaten, Tantalaten, Boraten, Vanadaten, Sulfoxiden, Silikaten, Gallaten, Aluminaten, Halogenidverbindungen
zur Markierung von Gegenständen, insbesondere von Geldscheinen, Informationsträgern, Computerbauteilen, Fahrzeugbauteilen, Motorenteilen, Dokumenten, Schließanlagen, Diebstahlsicherungseinrichtungen, für sichtbares Licht transparenten Gegenständen, Schmuckgegenständen, oder Kunstgegenständen, oder zur Anfertigung von Fingerabdrücken.

45. Verwendung von dotierten Nanopartikeln zur Markierung nach dem vorstehenden Anspruch.

46. Verwendung von Nanopartikeln nach Anspruch 27 oder eines Stoffes nach einem der Ansprüche 28 bis 38 zur Markierung nach Anspruch 44.

47. Verwendung von Nanopartikeln nach Anspruch 27 oder eines Stoffes nach einem der Ansprüche 28 bis 38 zur Markierung von Flüssigkeiten oder Gasen.

48. Verwendung eines UV-Licht absorbierenden Stoffes nach Anspruch 36 zur Wandlung des UV-Lichts in eine andere Energieform.

49. Verwendung eines UV- Licht absorbierenden Stoffes nach Anspruch 36 als Wandler in sichtbares Licht.

50. Verwendung von-Nanopartikeln enthaltend einen Stoff oder mehrere aus der Familie der Phosphore, insbesondere Verwendung von Wolframaten, Tantalaten, Boraten, Vanadaten, Sulfoxiden, Silikaten, Gallaten, Aluminaten, Halogenidverbindungen
zur Lichterzeugung in Geräten oder Leuchtkörpern.

51. Verwendung von dotierten Nanopartikeln nach Anspruch 27 oder eines Stoffes nach einem der Ansprüche 28 bis 39 zur Lichterzeugung in Geräten oder Leuchtkörpern.

52. Verwendung von dotierten Nanopartikeln nach Anspruch 27 oder eines Stoffes nach einem der Ansprüche 28 bis 39 oder einer Polymerfolie nach Anspruch 40 zur Herstellung von nur nach entsprechender Anregung sichtbaren Bildern.

53. Detektionsverfahren zur Erkennung der Fluoreszenz einer Probesubstanz (28) als übereinstimmend mit der einer Referenzsubstanz eines vorgegebenen Nanopartikeltyps mit einem Fluoreszenzemissionshauptpeak (40), enthaltend die Schritte:
Anregen der Probesubstanz (28) mit einer für den vorgegebenen Nanopartikeltyp als erfolgreich bekannten Anregungsmethode,
Filtern des Hauptpeakspektralbereichs der Probesubstanz (28),
Filtern wenigstens eines Nebenspektralbereichs neben dem Hauptpeak (40), bei dem für den vorgegebenen Nanopartikeltyp relativ zur Intensität des Hauptpeaks geringe oder keine Intensität erwartet wird,
Quantifizieren der gefilterten Strahlungsintensitäten in den vorgegebenen Spektralbereichen, und
Feststellen einer oder mehrerer Relationen der gefilterten Strahlungsintensitäten zueinander,
Bewerten der Übereinstimmung von Probesubstanz (28) mit Referenzsubstanz anhand der Relationen.

54. Detektionsverfahren nach dem vorstehenden Anspruch, bei dem ausser dem Hauptpeak (40) zwei oder mehr Nebenspektralbereiche gefiltert und ausgewertet werden.

55. Detektionsverfahren nach einem der beiden vorstehenden Ansprüche, enthaltend die Schritte,
das Bild der Flüoreszehzstrahlungsquelle zu erfassen und auszuwerten.

56. Vorrichtung zur Durchführung des Detektionsverfahrens nach Anspruch 53, enthaltend
eine Einrichtung (26) zum Anregen der Probesubstanz (28) mit einem für den vorgegebenen Nanopartikeltyp als erfolgreich bekannten Anregungsspektrum,
eine Einrichtung (12) zum Filtern des Hauptpeakspektralbereichs der Probesubstanz (28),
eine Einrichtung (10,14) zum Filtern wenigstens eines Nebenspektralbereichs neben dem Hauptpeak (40), bei dem für den vorgegebenen Nanopartikeltyp relativ zur Intensität des Hauptpeaks geringe oder keine Intensität erwartet wird,
eine Einrichtung (16,18,20) zum Quantifizieren der gefilterten Strahlungsintensitäten in den vorgegebenen Spektralbereichen,
eine Einrichtung (22) zum Feststellen einer oder mehrerer Relationen der gefilterten Strahlungsintensitäten zueinander, eine Einrichtung (22,24) zum Bewerten der Übereinstimmung von Probesubstanz (28) mit Referenzsubstanz anhand der Relationen.

57. Vorrichtung nach dem vorstehenden Anspruch, enthaltend eine Einrichtung (16,20,22,24), um ausser dem Hauptpeak (40) zwei oder mehr Nebenspektralbereiche -filtern und auszuwerten.

58. Vorrichtung nach einem der beiden vorstehenden Ansprüche, enthaltend
eine Einrichtung (30,32,34), um das Bild der Fluoreszenzstrahlungsquelle zu erfassen,
und eine Einrichtung (22,24), um das Bild der Fluoreszenzstrahlungsquelle auszuwerten.
